(19) Europäisches Patentamt
European Patent Office
Office européen des brevets

(11) **EP 3 855 635 A1**

(12) **EUROPEAN PATENT APPLICATION**

(43) Date of publication:
**28.07.2021 Bulletin 2021/30**

(51) Int Cl.:
***H04B 7/0456*** (2017.01)

(21) Application number: **20153656.2**

(22) Date of filing: **24.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FRAUNHOFER-GESELLSCHAFT zur
Förderung
der angewandten Forschung e.V.
80686 München (DE)**

(72) Inventors:
• **GROßMANN, Marcus
91058 Erlangen (DE)**
• **RAMIREDDY, Venkatesh
91058 Erlangen (DE)**
• **LANDMANN, Markus
91058 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **CSI REPORTING BASED ON LINEAR COMBINATION PORT-SELECTION CODEBOOK**

(57)    A method for providing feedback about a MIMO channel between a transmitter and a receiver in a wireless communication system is described. The includes receiving, at the receiver, a radio signal via the MIMO channel, the radio signal including reference signals, like a CSI-RS signal, according to at least one reference signal configuration, the reference signal configuration being known at the receiver and indicating an antenna port or a plurality of antenna ports that is/are associated with a reference signal or a plurality of reference signals; estimating, at the receiver, the MIMO channel based on measurements on the one or more reference signals received over the plurality of antenna ports indicated in the reference signal configuration; determining, at the receiver, a precoding vector or matrix to be used at the transmitter so as to achieve a predefined property for a communication over the MIMO channel, the precoding vector or matrix being determined based on the estimated MIMO channel, on one or more vectors or one or more combinations of vectors selected from at least one port-selection codebook and on a set of precoding coefficients, wherein the port-selection codebook comprises a set of vectors, each vector being associated with one of the antenna ports and having a single element which is one and the remaining elements being zeros; and reporting, by the receiver, a feedback to the transmitter, the feedback indicating the precoding vector or matrix determined by the receiver.

Receiving, at the UE, a radio signal via the MIMO channel, the radio signal including reference signals, like a CSI-RS signal, according to at least one reference signal configuration

the reference signal configuration is known at the UE and indicates an antenna port or a plurality of antenna ports that is/are associated with a reference signal or a plurality of reference signals — S1

Estimating, at the UE, the MIMO channel based on measurements on the one or more reference signals received over the plurality of antenna ports indicated in the reference signal configuration — S2

Determining, at the UE, a precoding vector or matrix to be used at the gNB so as to achieve a predefined property for a communication over the MIMO channel

the precoding vector or matrix is determined based on the estimated MIMO channel, on one or more vectors or one or more combinations of vectors selected from at least one port-selection codebook and on a set of precoding coefficients,

the port-selection codebook includes a set of vectors, and each vector being associated with one of the antenna ports and having a single element which is one and the remaining elements being zeros — S3

Reporting, by the UE, a feedback to the gNB

the feedback indicates the precoding vector or matrix determined by the UE — S4

Fig. 4

EP 3 855 635 A1

**Description**

The present application concerns the field of wireless communications, more specifically to feedback reporting for a codebook-based precoding in a wireless communication system. Embodiments related to CSI reporting based on linear combination port-selection codebook.

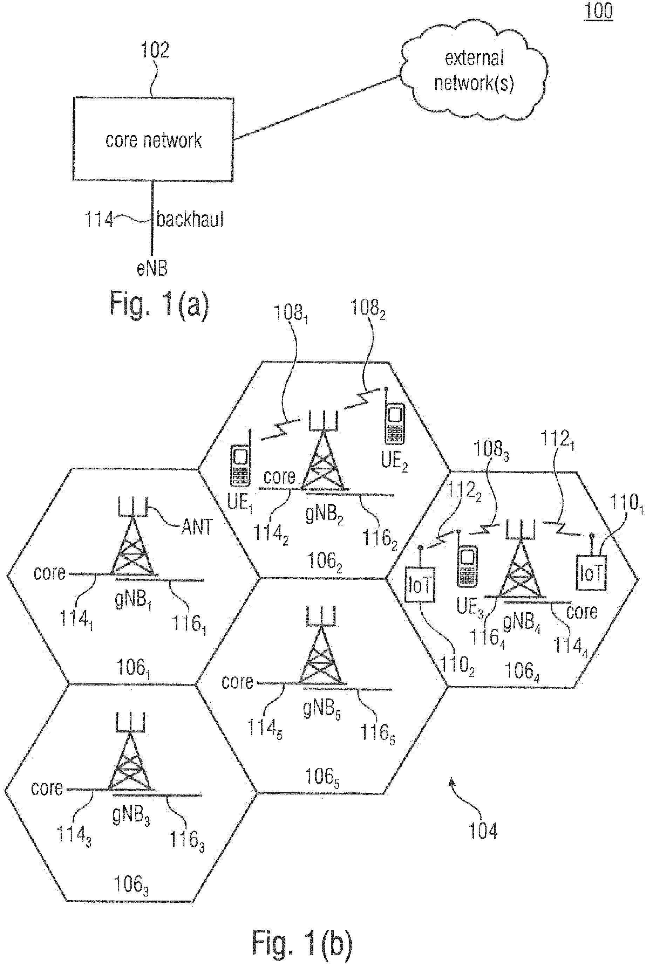

Fig. 1 is a schematic representation of a terrestrial wireless network 100 including, as is shown in Fig. 1(a), a core network 102 and one or more radio access networks $RAN_1$, $RAN_2$, ...$RAN_N$. Fig. 1(b) is a schematic representation of a radio access network 104 that may include one or more base stations $gNB_1$ to $gNB_5$, each serving a specific area surrounding the base station schematically represented by respective cells $106_1$ to $106_5$.

The base stations are provided to serve users within a cell. The term base station, BS, refers to a gNB in 5G networks, eNB in UMTS/LTE/LTE-A/ LTE-A Pro, or just BS in other mobile communication standards. A user may be a stationary device or a mobile device which connects to a base station or to a user. The mobile device may include a physical device, like a user equipment, UE; or a loT device, a ground based vehicle, such as a robot or a car, an aerial vehicle, such as a manned or unmanned aerial vehicle (UAV), the latter also referred to as drone, a building or any other item or device having embedded network connectivity that enables collecting or exchanging data across an existing network infrastructure, like a device including certain electronics, software, sensors, actuators, or the like. Fig. 1 shows only five cells, however, the wireless communication system may include more such cells. Fig. 1 shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1 shows two loT devices $110_1$ and $110_2$ in cell $106_4$, which may be stationary or mobile devices. The loT device $110_1$ accesses the wireless communication system via the base station $gNB_4$ to receive and transmit data as schematically represented by arrow $112_1$. The loT device $110_2$ accesses the wireless communication system via the user $UE_3$ as is schematically represented by arrow $112_2$. The respective base station $gNB_1$ to $gNB_5$ may be connected to the core network 102, e.g. via the S1 interface, via respective backhaul links $114_1$ to $114_5$, which are schematically represented in Fig. 1 by the arrows pointing to "core". The core network 102 may be connected to one or more external networks. Further, some or all of the respective base station $gNB_1$ to $gNB_5$ may connected, e.g. via the S1 or X2 interface or XN interface in NR, with each other via respective backhaul links $116_1$ to $116_5$, which are schematically represented in Fig. 1 by the arrows pointing to "gNBs".

For data transmission a physical resource grid may be used. The physical resource grid may comprise a set of resource elements to which various physical channels and physical signals are mapped. For example, the physical channels may include the physical downlink, uplink and/or sidelink, SL, shared channels (PDSCH, PUSCH, PSSCH) carrying user specific data, also referred to as downlink, uplink or sidelink payload data, the physical broadcast channel (PBCH) carrying for example a master information block (MIB) and a system information block (SIB), the physical downlink, uplink and/or sidelink control channels (PDCCH, PUCCH, PSCCH) carrying for example the downlink control information (DCI), the uplink control information (UCI) or the sidelink control information (SCI). For the uplink, the physical channels may further include the physical random access channel (PRACH or RACH) used by UEs for accessing the network once a UE is synchronized and obtains the MIB and SIB. The physical signals may comprise reference signals or symbols (RS), synchronization signals and the like. The resource grid may comprise a frame or radio frame having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also include or consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

The wireless network or communication system depicted in Fig. 1 may by a heterogeneous network having two distinct overlaid networks, a network of macro cells with each macro cell including a macro base station, like base station $gNB_1$ to $gNB_5$, and a network of small cell base stations (not shown in Fig. 1), like femto- or pico-base stations. In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-advanced pro standard or the 5G or NR, new radio, standard.

In a wireless communication system like the one depicted schematically in Fig. 1, multi-antenna techniques may be used, e.g., in accordance with LTE, NR or any other communication system, to improve user data rates, link reliability, cell coverage and network capacity. To support multi-stream or multi-layer transmissions, linear precoding is used in the physical layer of the communication system. Linear precoding is performed by a precoder matrix which maps layers of data to antenna ports. The precoding may be seen as a generalization of beamforming, which is a technique to spatially direct or focus a data transmission towards an intended receiver. The precoder matrix to be used at the gNB to map the data to the transmit antenna ports is decided using channel state information, CSI.

In a wireless communication system as described above, such as LTE or New Radio (5G), downlink signals convey data signals, control signals containing downlink, DL, control information (DCI), and a number of reference signals or symbols (RS) used for different purposes. A gNodeB (or gNB or base station) transmits data and downlink control information (DCI) through the so-called physical downlink shared channel (PDSCH) and physical downlink control channel (PDCCH) or enhanced PDCCH (ePDCCH), respectively. Moreover, the downlink signal(s) of the gNB may contain one or multiple types of RSs including a common RS (CRS) in LTE, a channel state information RS (CSI-RS), a demodulation RS (DM-RS), and a phase tracking RS (PT-RS). The CRS is transmitted over a DL system bandwidth part and used at the user equipment (UE) to obtain a channel estimate to demodulate the data or control information. The CSI-RS is transmitted with a reduced density in the time and frequency domain compared to CRS and used at the UE for channel estimation or for channel state information (CSI) acquisition. The DM-RS is transmitted only in a bandwidth part of the respective PDSCH and used by the UE for data demodulation. For signal precoding at the gNB, several CSI-RS reporting mechanisms are used such as non-precoded CSI-RS and beamformed CSI-RS reporting (see reference [1]). For a non-precoded CSI-RS, a one-to-one mapping between a CSI-RS port and a transceiver unit, TXRU, of the antenna array at the gNB is utilized. Therefore, non-precoded CSI-RS provides a cell-wide coverage where the different CSI-RS ports have the same beam direction and beam width. For beamformed/precoded UE-specific or non-UE-specific CSI-RS, a beamforming operation is applied over a single antenna ports or over multiple antenna ports to have several narrow beams with high gain in different directions and, therefore, no cell-wide coverage.

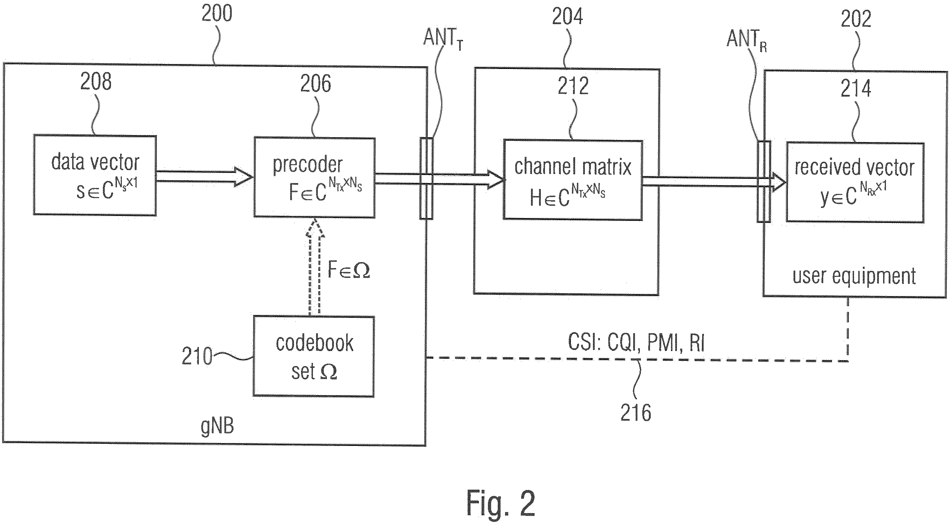

In a wireless communication system employing time division duplexing, TDD, due to channel reciprocity, the channel state information (CSI) is available at the base station (gNB). However, when employing frequency division duplexing, FDD, due to the absence of channel reciprocity, the channel is estimated at the UE and the estimate is fed back to the gNB. Fig. 2 shows a block-based model of a MIMO DL transmission using codebook-based-precoding in accordance with LTE release 8. Fig. 2 shows schematically the base station 200, gNB, the user equipment, UE, 202 and the channel 204, like a radio channel for a wireless data communication between the base station 200 and the user equipment 202. The base station includes an antenna array $ANT_T$ having a plurality of antennas or antenna elements, and a precoder 206 receiving a data vector 208 and a precoder matrix F from a codebook 210. The channel 204 may be described by the channel tensor/matrix 212. The user equipment 202 receives the data vector 214 via an antenna or an antenna array $ANT_R$ having a plurality of antennas or antenna elements. A feedback channel 216 between the user equipment 202 and the base station 200 is provided for transmitting feedback information. The previous releases of 3GPP up to Rel.15 support the use of several downlink reference symbols (such as CSI-RS) for CSI estimation at the UE.

In FDD systems (up to Rel. 15), the estimated channel at the UE is reported to the gNB implicitly where the CSI report transmitted by the UE over the feedback channel includes the rank index (RI), the precoding matrix index (PMI) and the channel quality index (CQI) (and the CRI from Rel. 13) allowing, at the gNB, to decide the precoding matrix, and the modulation order and coding scheme (MCS) of the symbols to be transmitted. The PMI and the RI are used to determine the precoding matrix from a predefined set of matrices $\Omega$ also referred to as codebook. The codebook, e.g., in accordance with LTE, may be a look-up table with matrices in each entry of the table, and the PMI and RI from the UE decide from which row and column of the table the precoder matrix to be used is obtained. The precoders and codebooks are designed up to Rel. 15 for gNBs equipped with one-dimensional Uniform Linear Arrays (ULAs) having $N_1$ dual-polarized antennas (in total $N_t = 2N_1$ antennas), or with two-dimensional Uniform Planar Arrays (UPAs) having dual-polarized antennas at $N_1N_2$ positions (in total $N_t = 2N_1N_2$ antennas). The ULA allows controlling the radio wave in the horizontal (azimuth) direction only, so that azimuth-only beamforming at the gNB is possible, whereas the UPA supports transmit beamforming on both vertical (elevation) and horizontal (azimuth) directions, which is also referred to as full-dimension (FD) MIMO. The codebook, e.g., in the case of massive antenna arrays such as FD-MIMO, may be a set of beamforming weights that forms spatially separated electromagnetic transmit/receive beams using the array response vectors of the array. The beamforming weights (also referred to as the array steering vectors) of the array are amplitude gains and phase adjustments that are applied to the signal fed to the antennas (or the signal received from the antennas) to transmit (or obtain) a radiation towards (or from) a particular direction. The components of the precoder matrix are obtained from the codebook, and the PMI and the RI are used to read the codebook and obtain the precoder. The array steering vectors may be described by the columns of a 2D Discrete Fourier Transform (DFT) matrix when ULAs or UPAs are used for signal transmission.

The precoder matrices used in the Type-I and Type-II CSI reporting schemes in 3GPP New Radio Rel. 15 are defined in the frequency-domain and have a dual-stage structure (i.e., two components codebook): $F(s) = F_1F_2(s)$, $s = 0 ..., S$ - 1 (see reference [1]), where $S$ denotes the number of subbands. The first component or the so-called first stage precoder, $F_1$, is used to select a number of beam vectors and (if configured) rotation oversampling factors from a Discrete Fourier Transform-based (DFT-based) matrix, which is also called the spatial codebook. Moreover, the first stage precoder, $F_1$, corresponds to a wide-band matrix, independent of the subband index s, and contains L spatial beamforming vectors (the so-called spatial beams) $b_l \in \mathbb{C}^{N_1 N_2 \times 1}, l = 0, .., L - 1$ selected from a DFT-based codebook matrix for the two polarizations of the antenna array,

$$F_1 = \begin{bmatrix} b_0, .., b_{L-1} & 0 & \cdots & 0 \\ 0 & \cdots & 0 & b_0, .., b_{L-1} \end{bmatrix} \in \mathbb{C}^{2N_1 N_2 \times 2L}.$$

The first component or the so-called first stage precoder, $F_1$, is used to select a number of spatial domain (SD) or beam vectors and the rotation oversampling factors from a Discrete Fourier Transform-based (DFT-based) matrix which is also called the spatial codebook. The spatial codebook comprises an oversampled DFT matrix of dimension $N_1 N_2 \times N_1 O_1 N_2 O_2$, where $O_1$ and $O_2$ denote the oversampling factors with respect to the first and second dimension of the codebook, respectively. The DFT vectors in the codebook are grouped into $(q_1, q_2)$, $0 \le q_1 \le O_1 - 1$, $0 \le q_2 \le O_2 - 1$ subgroups, where each subgroup contains $N_1 N_2$ DFT vectors, and the parameters $q_1$ and $q_2$ are denoted as the rotation oversampling factors, with respect to the first and second dimension of the antenna array, respectively.
The second component or the so-called second stage precoder, $F_2(s)$, is used to combine the selected beam vectors. This means the second stage precoder, $F_2(s)$, corresponds to a selection/combining/co-phasing matrix to select/combine/co-phase the beams defined in $F_1$ for the s-th configured sub-band. For example, for a rank-1 transmission and Type-I CSI reporting, $F_2(s)$ is given for a dual-polarized antenna array by (see reference [1])

$$F_2(s) = \begin{bmatrix} e_u \\ e^{j\delta_1} e_u \end{bmatrix} \in \mathbb{C}^{2L \times 1},$$

where $e_u \in \mathbb{C}^{L \times 1}$ contains zeros at all positions, except the u-th position which is one. Such a definition of $e_u$ selects the u-th vector in $F_1$ per polarization of the antenna. Furthermore, $e^{j\delta_1}$ is a quantized phase adjustment for the second polarization of the antenna array. For example, for a rank-1 transmission and Type-II CSI reporting, $F_2(s)$ is given for dual-polarized antenna arrays by (see reference [1])

$$F_2(s) = \begin{bmatrix} e^{j\delta_0} p_0 \\ \vdots \\ e^{j\delta_{2L-1}} p_{2L-1} \end{bmatrix} \in \mathbb{C}^{2L \times 1}$$

where $p_l$ and $e^{j\delta_1}$, $l = 0,2,\cdots,2L$ - 1 are quantized amplitude and phase beam-combining coefficients, respectively. For rank-$R$ transmission, $F_2(s)$ contains $R$ vectors, where the entries of each vector are chosen to combine single or multiple beams within each polarization.
The selection of the matrices $F_1$ and $F_2(s)$ is performed by the UE based on the knowledge of the channel conditions. The selected matrices are indicated in the CSI report in the form of a RI and a PMI, which are used at the gNB to update the multi-user precoder for the next transmission time interval.
For the 3GPP Rel.-15 dual-stage Type-II CSI reporting, the second stage precoder, $F_2(s)$, is calculated on a subband basis such that the number of columns of $F_2 = \begin{bmatrix} F_2^{(r)}(0) \; ... \; F_2^{(r)}(s) \; ... \; F_2^{(r)}(S-1) \end{bmatrix}$ for the r-th transmission layer depends on the number of configured subbands $S$. Here, a subband refers to a group of adjacent physical resource blocks (PRBs). A drawback of the Type-II CSI feedback is the large feedback overhead for reporting the combining coefficients on a subband basis. The feedback overhead increases approximately linearly with the number of subbands and becomes considerably large for large numbers of subbands. To overcome the high feedback overhead of the Rel.-

Type-II CSI reporting scheme, it has been decided in 3GPP RAN#81 (see reference [2] - 3GPP radio access network (RAN) 3GPP RAN#81) to study feedback compression schemes for the second stage precoder $\boldsymbol{F}_2$. In several contributions (see references [3] and [4]), it has been demonstrated that the number of beam-combining coefficients in $\boldsymbol{F}_2$ may be drastically reduced when transforming $\boldsymbol{F}_2$ using a small set of DFT-based basis vectors into the delay domain. The corresponding three-stage precoder relies on a three-stage (i.e., three components) $\boldsymbol{F}_1 \boldsymbol{F}_2^{(r)} \boldsymbol{F}_3^{(r)}$ codebook. The first component, represented by the matrix $\boldsymbol{F}_1$, is identical to the Rel.-15 NR component, is independent off the transmission layer ($r$), and contains a number of spatial domain (SD) basis vectors selected from a spatial codebook. The second component, represented by the matrix $\boldsymbol{F}_3^{(r)}$, is layer-dependent and is used to select a number of delay domain (DD) basis vectors from a Discrete Fourier Transform-based (DFT-based) matrix which is also called the delay codebook. The third component, represented by the matrix $\boldsymbol{F}_2^{(r)}$, contains a number of combining coefficients that are used to combine the selected SD basis vectors and DD basis vectors from the spatial and delay codebooks, respectively.

Assuming a rank-$R$ transmission the three-component precoder matrix or CSI matrix for a configured $2N_1N_2$ antenna/DL-RS ports and configured $S$ subbands is represented for the first polarization of the antenna ports and r-th transmission layer as

$$F^{(r,1)} = \alpha^{(r)} \sum_{l=0}^{L-1} \boldsymbol{b}_l \sum_{d=0}^{D-1} \gamma_{1,l,d}^{(r)} \, \boldsymbol{d}_d^{(r)}$$

and for the second polarization of the antenna ports and r-th transmission layer as

$$F^{(r,2)} = \alpha^{(r)} \sum_{l=0}^{L-1} \boldsymbol{b}_l \sum_{d=0}^{D-1} \gamma_{2,l,d}^{(r)} \, \boldsymbol{d}_d^{(r)},$$

where $\boldsymbol{b}_u$ ($l = 0, ..., L - 1$) represents the u-th SD basis vector selected from the spatial codebook, $\boldsymbol{d}_d^{(r)}$ ($d = 0, ..., D - 1$) is the d-th DD basis vector associated with the r-th layer selected from the delay codebook, $\gamma_{p,l,d}^{(r)}$ is the complex delay-domain combining coefficient associated with the u-th SD basis vector, the d-th DD basis vector and the p-th polarization, $D$ represents the number of configured DD basis vectors, and $\alpha^{(r)}$ is a normalizing scalar.

An advantage of the three-component CSI reporting scheme in the above equations is that the feedback overhead for reporting the combining coefficient of the precoder matrix or CSI matrix is no longer dependent on the number of configured frequency domain subbands (i.e., it is independent from the system bandwidth). Therefore, the above three-component codebook has been recently adopted for the 3GPP Rel.-16 dual-stage Type-II CSI reporting specification (see reference [5]).

It is noted that the information in the above section is only for enhancing the understanding of the background of the invention and therefore it may contain information that does not form prior art and is already known to a person of ordinary skill in the art.

Embodiments of the present invention are now described in further detail with reference to the accompanying drawings, in which:

Fig. 1     shows a schematic representation of a wireless communication system;

Fig. 2     shows a block-based model of a MIMO DL transmission using codebook-based-precoding in accordance with LTE release 8;

Fig. 3     is a schematic representation of a wireless communication system for communicating information between a transmitter, which may operate in accordance with the inventive teachings described herein, and a plurality of receivers, which may operate in accordance with the inventive teachings described herein;

Fig. 4    is a flow diagram representing a method for providing feedback about a MIMO channel between a transmitter, like a gNB, and a receiver, like a UE, in a wireless communication system according to an embodiment of the present invention;

Fig. 5    is a flow diagram representing a method performed by a user equipment, UE, for providing channel state information, CSI, feedback in the form of one or more CSI reports in a wireless communication system according to another embodiment of the present invention;

Fig. 6    illustrates a port grouping in accordance with an embodiment of the present invention assuming no polarization and one transmission layer;

Fig. 7    illustrates the port grouping in accordance with an embodiment of the present invention for two polarizations and one transmission layer;

Fig. 8    illustrates the port grouping in accordance with an embodiment of the present invention for two polarizations and two transmission layers; and

Fig. 9    illustrates a computer system on which units or modules as well as the steps of the methods described in accordance with the inventive approach may execute.

In the following, preferred embodiments of the present invention are described in further detail with reference to the enclosed drawings in which elements having the same or similar function are referenced by the same reference signs.

The current 3GPP Type-I and Type-II CSI reporting schemes are mainly used in frequency division duplex (FDD) system configurations and do not exploit properties of uplink/downlink channel reciprocity. Contrary to FDD system configurations, channel reciprocity is mainly applicable in time division duplex (TDD) systems in which the same carrier is used for uplink and downlink transmissions. Channel measurements performed in the uplink at the base station (gNB) may be used to support downlink transmissions, for example downlink beamforming, without additional feedback or with reduced feedback from the UE.

In FDD systems, channel reciprocity is usually not satisfied since the duplex distance between the uplink and the downlink carriers may be larger than the channel coherence bandwidth. A known approach to obtain CSI even in FDD systems at the base station without UE assistance is based on channel extrapolation (see references [6] and [7]). There, it is assumed that the downlink channel and/or its multipath parameters may be calculated by an extrapolation of the channel response (or its multipath parameters) measured in the uplink. However, measurement results show that such an extrapolation, especially with respect to the phase of the multipath components of the channel, may be inaccurate and lead to inaccurate results (see reference [8]). Recently, it was found that for a variety of scenarios the spatial and delay properties of the uplink and downlink channel responses in FDD systems are strongly correlated, hence, the channel may be considered as partial reciprocal with respect to the angle(s) and delay(s) of the multipath components (see reference [9]).

In current Release 16 Type-II CSI reporting (see reference [5]) the UE needs to calculate a set of beams, a set of delays, and a set of precoder coefficients for the selected beams and delays of the precoder matrix. This, however, results in an increased complexity of the precoder calculation and a feedback overhead of the CSI report. Further, the calculation and reporting of the beams and delays is based on codebooks with a limited resolution, i.e., the information of angles and delays of multipath components of the channel is available at the gNB only with a reduced resolution due to its quantization with a codebook. This reduces the performance of a corresponding precoded downlink transmission employing the precoder coefficients reported by the UE. The present invention addresses these drawbacks.

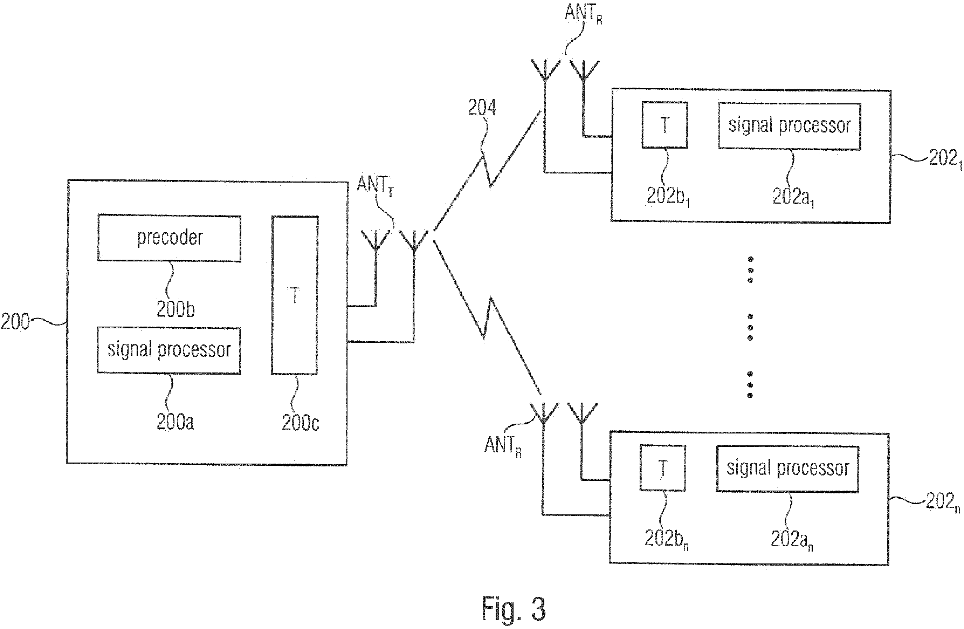

In accordance with embodiments of the present invention angular and delay information obtained at the gNB by uplink channel sounding measurements is used to precode/beamform a set of CSI-RS resources. The precoded/beamformed CSI-RS resources are used for downlink channel measurements and CSI calculations at the UE. Based on the downlink measurements of the precoded/beamformed CSI-RS, the UE calculates and reports a set of complex precoder coefficients for the configured antenna ports, wherein each antenna port is assumed to be associated with a beam and a delay. As the UE only determines a set of precoder coefficients for the configured ports and does not require to calculate beams and delays for the precoder matrix as in Type-II CSI reporting, the complexity of the precoder calculation and the feedback overhead of the CSI report will be reduced drastically. Moreover, as the information of the angles and delays of the multipath components of the channel is available at the gNB with a high resolution and not quantized with a codebook and reported by the UE, the performance of the corresponding precoded downlink transmission employing the precoder coefficients reported by the UE is significantly higher than the performance achieved by Type-II CSI reporting. Embodiments of the present invention may be implemented in a wireless communication system or network as depicted in Fig. 1 or Fig. 2 including transmitters or transceivers, like base stations, and communication devices (receivers) or users, like mobile or stationary terminals or IoT devices, as mentioned above. Fig. 3 is a schematic representation of a wireless communication system for communicating information between a transmitter 200, like a base station, and a plurality of communication devices $202_1$ to $202_n$, like UEs, which are served by the base station 200. The base station 200 and the UEs 202 may communicate via a wireless communication link or channel 204, like a radio link. The base station 200 includes one or more antennas $ANT_T$ or an antenna array having a plurality of antenna elements, and a signal processor 200a. The UEs 202 include one or more antennas $ANT_R$ or an antenna array having a plurality of antennas, a signal processor $202a_1$, $202a_n$, and a transceiver $202b_1$, $202b_n$. The base station 200 and the respective UEs 202 may operate in accordance with the inventive teachings described herein.

**METHOD**

The present invention provides (see for example claim 1) a method for providing feedback about a MIMO channel between a transmitter and a receiver in a wireless communication system, the method comprising:

receiving, at the receiver, a radio signal via the MIMO channel, the radio signal including reference signals, like a CSI-RS signal, according to at least one reference signal configuration, the reference signal configuration being known at the receiver and indicating an antenna port or a plurality of antenna ports that is/are associated with a reference signal or a plurality of reference signals;

estimating, at the receiver, the MIMO channel based on measurements on the one or more reference signals received over the plurality of antenna ports indicated in the reference signal configuration;

determining, at the receiver, a precoding vector or matrix to be used at the transmitter so as to achieve a predefined property for a communication over the MIMO channel, the precoding vector or matrix being determined based on the estimated MIMO channel, on one or more vectors or one or more combinations of vectors selected from at least one port-selection codebook and on a set of precoding coefficients, wherein the port-selection codebook comprises a set of vectors, each vector being associated with one of the antenna ports and having a single element which is one and the remaining elements being zeros; and

reporting, by the receiver, a feedback to the transmitter, the feedback indicating the precoding vector or matrix determined by the receiver.

In accordance with embodiments of the present invention (see for example claim 2), the plurality, $P$, of antenna ports in the reference signal configuration are grouped into a number, $Z$, of port groups, with $Z \leq P$, so that each port group is associated with a subset of the $P$ antenna ports.

In accordance with embodiments of the present invention (see for example claim 3), the UE is configured to select a number, L, of port groups out of the $Z$ port groups and one or more ports in at least one port group for the calculation of the precoding vector or matrix.

In accordance with embodiments of the present invention (see for example claim 4), the number, L, of port groups is fixed and is identical to the Z port groups, the receiver, thereby, not selecting port groups.

In accordance with embodiments of the present invention (see for example claim 5), each vector is associated with one antenna port of a port group, and the port-selection codebook further comprises a set of further vectors, each further vector being associated with one of the port groups and having a single element which is one and the remaining elements being zeros.

In accordance with embodiments of the present invention (see for example claim 6), the port-selection codebook comprises

- a first code book including a set of first vectors, each first vector being associated with one of the port groups and having a single element which is one and the remaining elements being zeros, and
- a second code book including a set of second vectors, each second vector being associated with one antenna port of a port group and having a single element which is one and the remaining elements being zeros.

In accordance with embodiments of the present invention (see for example claim 7), the receiver is configured via a higher layer configuration, e.g., RRC, with the grouping of the plurality of antenna ports via a higher layer configuration, the higher layer configuration indicating the number, $P$, of antenna ports and the number, $Z$, of port groups, and

the number of antenna ports per group is either indicated directly by the higher layer configuration, or determined by the receiver based on parameters contained in the higher layer configuration.

In accordance with embodiments of the present invention (see for example claim 8), the receiver priori knows, e.g., the grouping is defined in a specification, the grouping of the plurality of antenna ports, and a higher layer configuration indicates, e.g., via RRC, the number P of antenna ports.

In accordance with embodiments of the present invention (see for example claim 9), the receiver, for the communication over the MIMO channel, is to use one or more subbands of a transmission bandwidth, e.g., the receiver is configured with a number of subbands to be used, and wherein the precoding vector or matrix is identical for the subbands used by the receiver for the communication.

In accordance with embodiments of the present invention (see for example claim 10), the feedback indicates the precoding coefficients determined by the receiver, and wherein the receiver is configured to decompose each precoder coefficient in one or more amplitude coefficients and a phase coefficient.

In accordance with embodiments of the present invention (see for example claim 11), the feedback indicates non-zero precoding coefficients determined by the receiver.

In accordance with embodiments of the present invention (see for example claim 12), the feedback includes one or more of:

- a Channel State Information, CSI, feedback,
- Precoder matrix Indicator, PMI,
- PMI/Rank Indicator, PMI/RI.

In accordance with embodiments of the present invention (see for example claim 13), the receiver is configured with or a priori knows one or more feedback configurations, e.g., CSI report configurations, associated with the one or more reference signal configurations, and a precoding vector or matrix is determined for each feedback configuration.

In accordance with embodiments of the present invention (see for example claim 14), each of the plurality of antenna ports in the reference signal configuration is precoded or beamformed and is associated with a spatial beam and a delay.

In accordance with embodiments of the present invention (see for example claim 15) the method further comprises performing, by the transmitter, uplink channel sounding measurements to obtain angular or spatial information and delay information, and utilizing the obtained angular or spatial information and delay information for precoding or beamforming a set of reference signal resources to be used for the channel measurements and feedback calculations at the receiver.

**COMPUTER PROGRAM PRODUCT**

The present invention provides a computer program product comprising instructions which, when the program is executed by a computer, causes the computer to carry out one or more methods in accordance with the present invention.

**RECEIVER**

The present invention provides (see for example claim 17) a receiver apparatus in a wireless communication system, the receiver is configured to provide feedback about a MIMO channel between a transmitter and the receiver in the wireless communication system, comprising:

a receiver unit to receive a radio signal via the MIMO channel, the radio signal including reference signals, like a CSI-RS signal, according to at least one reference signal configuration, the reference signal configuration being known at the receiver and indicating an antenna port or a plurality of antenna ports that is associated with the reference signals;

a processor to estimate the MIMO channel based on measurements on the reference signals received over the plurality of antenna ports indicated in the reference signal configuration, and determine a precoding vector or matrix to be used at the transmitter so as to achieve a predefined property for a communication over the MIMO channel, the precoding vector or matrix being determined based on the estimated MIMO channel using at least one port-selection codebook and a set of precoding coefficients, wherein the port-selection codebook comprises a set of vectors, each vector being associated with one of the antenna ports and having a single element which is one and the remaining elements being zeros; and

wherein the receiver is to report a feedback to the transmitter, the feedback indicating the precoding vector or matrix determined by the receiver.

## TRANSMITTER

The present invention provides (see for example claim 18) a transmitter apparatus in a wireless communication system, the transmitter to receive feedback about a MIMO channel between the transmitter and a receiver in the wireless communication system, comprising:

a receiver unit to receive a radio signal via the MIMO channel, the radio signal including reference signals, like uplink channel sounding signals; and

a processor to perform uplink channel sounding measurements to obtain angular or spatial information and delay information, and utilize the obtained angular or spatial information and delay information for precoding or beamforming a set of reference signal resources to be used for the channel measurements and feedback calculations at the receiver; and

wherein the transmitter is to transmit to the receiver a radio signal via the MIMO channel, the radio signal including the precoded or beamformed reference signals, and receive a feedback from the receiver, the feedback indicating a precoding vector or matrix to be used at the transmitter so as to achieve a predefined property for a communication over the MIMO channel.

## SYSTEM

The present invention provides a wireless communication system operated in accordance with the inventive method. Further, the present invention provides a wireless communication system including one or more of the inventive receivers and/or one or more of the inventive transmitters.

In accordance with embodiments, the transmitter and/or the receiver mentioned above may include one or more of the following: a UE, or a mobile terminal, or a stationary terminal, or a cellular IoT-UE, or a vehicular UE, or a vehicular group leader (GL) UE, or an IoT, or a narrowband IoT, NB-IoT, device, or a WiFi non Access Point STAtion, non-AP STA, e.g., 802.11ax or 802.11be, or a ground based vehicle, or an aerial vehicle, or a drone, or a moving base station, or a road side unit, or a building, or any other item or device provided with network connectivity enabling the item/device to communicate using the wireless communication network, e.g., a sensor or actuator, or a macro cell base station, or a small cell base station, or a central unit of a base station, or a distributed unit of a base station, or a relay, or a remote radio head, or an AMF, or an SMF, or a core network entity, or mobile edge computing entity, or a network slice as in the NR or 5G core context, or any transmission/reception point, TRP, enabling an item or a device to communicate using the wireless communication network, the item or device being provided with network connectivity to communicate using the wireless communication network.

Embodiments of the present invention are now described in more details.

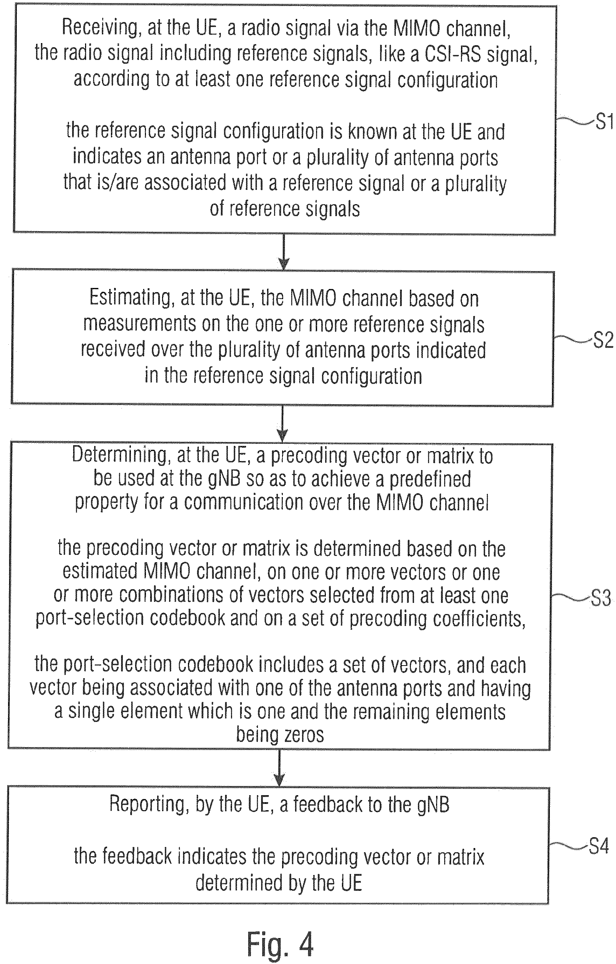

Fig. 4 is a flow diagram representing a method for providing feedback about a MIMO channel between a transmitter, like a gNB, and a receiver, like a UE, in a wireless communication system according to an embodiment of the present invention. In a step S1, the receiver receives a radio signal via the MIMO channel. The radio signal includes reference signals, like a CSI-RS signal, according to at least one reference signal configuration. The reference signal configuration is known at the receiver and indicates an antenna port or a plurality of antenna ports that is/are associated with a reference signal or a plurality of reference signals. In a step S2, the receiver estimates the MIMO channel based on measurements on the one or more reference signals received over the plurality of antenna ports indicated in the reference signal configuration. In a step S3, the receiver determines a precoding vector or matrix to be used at the transmitter so as to achieve a predefined property for a communication over the MIMO channel. The precoding vector or matrix is determined based on the estimated MIMO channel, on one or more vectors or one or more combinations of vectors selected from at least one port-selection codebook and on a set of precoding coefficients. The port-selection codebook includes a set of vectors, and each vector is associated with one of the antenna ports and has a single element which is one and the remaining elements being zeros. In a step S4, the receiver reports a feedback to the transmitter. The feedback indicates the precoding vector or matrix determined by the receiver.

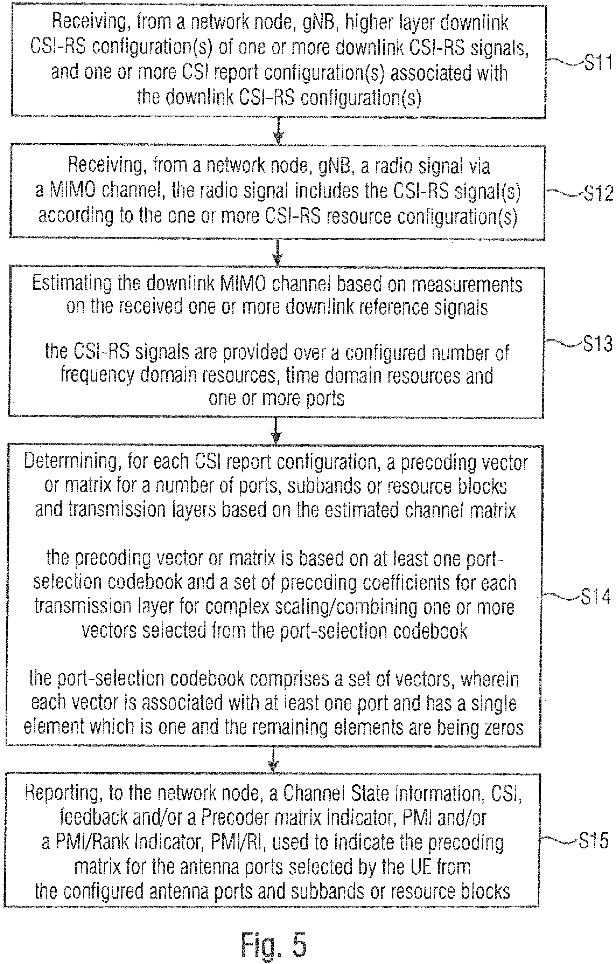

Fig. 5 is a flow diagram representing a method performed by a user equipment, UE, for providing channel state information, CSI, feedback in the form of one or more CSI reports in a wireless communication system according to another embodiment of the present invention.

In a step S11, the UE receives from a network node, like a gNB, higher layer CSI-RS configuration(s) of one or more downlink CSI-RS signals, and one or more CSI report configuration(s) associated with the downlink CSI-RS configuration(s). In a step S12, the UE receives from a network node a radio signal via a MIMO channel. The radio signal includes the CSI-RS signal(s) according to the one or more CSI-RS resource configuration(s). In a step S13, the UE estimates the downlink MIMO channel based on measurements on the received one or more downlink reference signals. The CSI-RS signals are provided over a configured number of frequency domain resources, time domain resources and one or more ports. In a step S14, the UE determines for each CSI report configuration a precoding vector or matrix for a number of ports, subbands or resource blocks and transmission layers based on the estimated channel matrix. The precoding vector or matrix is based on at least one port-selection codebook and a set of precoding coefficients for each transmission layer for complex scaling/combining one or more vectors selected from the port-selection codebook. The port-selection codebook includes a set of vectors, and each vector is associated with at least one port and has a single element which is one and the remaining elements are zeros. In a step S15, the UE reports to the network node a Channel State Information, CSI, feedback and/or a Precoder matrix Indicator, PMI and/or a PMI/Rank Indicator, PMI/RI, used to indicate the precoding matrix for the antenna ports selected by the UE from the configured antenna ports and subbands and/or resource blocks.

The antenna ports do not correspond to physical antennas at the transmitter, but are logical entities distinguished by their reference signal sequences (with respect to their frequency-time resource grid). An antenna port may map to one or more physical antenna elements of the transmitter antenna array. Each antenna or CSI-RS port may be precoded/beamformed by the transmitter and is associated with a spatial beam and a delay.

It is noted that the steps of the method described above with reference to Fig. 4 and to Fig. 5 also represent a description of a corresponding block or feature of a corresponding apparatus, e.g., the corresponding base station, like base station 200 described with reference to Fig. 2 or Fig. 3, or the corresponding UE, like UE 202 described with reference to Fig. 2 or Fig. 3.

*Grouping of CSI-RS ports*

In accordance with embodiments, for the precoder matrix selection at the UE, the network node may indicate groups of ports that are associated with the same beam and different delays to the UE. Using this information, the UE selects a set of port groups and calculates a set of precoder coefficients for the selected ports per group.

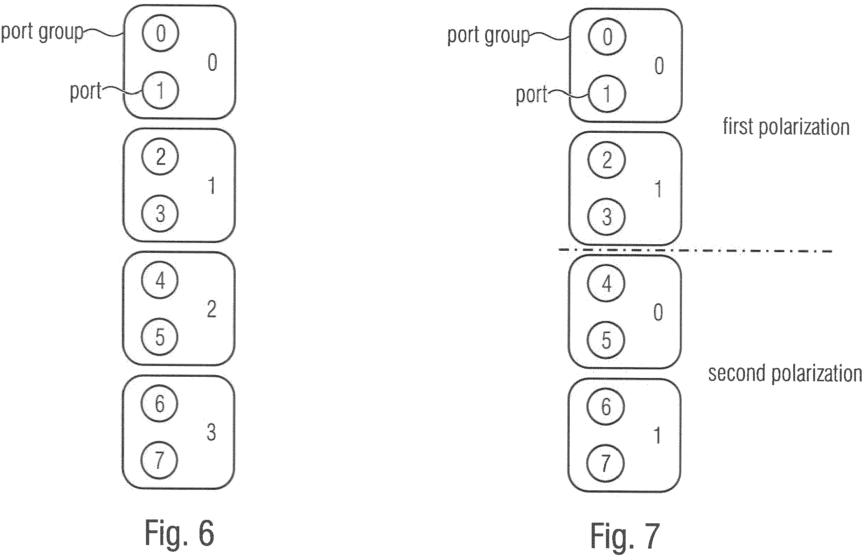

In accordance with embodiments, $P$ CSI-RS ports are grouped into $Z$ ($Z \leq P$) port groups, wherein each port group is associated with a subset of the $P$ CSI-RS ports. The number of CSI-RS ports in the $Z$ port groups may be either identical, partially identical or different. For example, the number of CSI-RS ports, $P$, is 32 and the number of port groups, $Z$, is 8 and the number of CSI-RS ports per port group is 4. In another embodiment, $P$ = 16 and $Z$ = 8 and the number of CSI-RS ports per port group is 2. In another embodiment, $P$ = 16 and $Z$ = 4, and the first port group is associated with 4 CSI-RS ports, the second port group is associated with 4 CSI-RS ports, the third port group is associated with 6 CSI-RS ports, and the fourth port group is associated with 2 CSI-RS ports. In another embodiment, $P$ = $Z$ such that the number of port groups is identical to the number of CSI-RS ports and the number of CSI-RS ports per port group is 1. Fig. 6 illustrates the port grouping in accordance with an embodiment of the present invention assuming $P$ = 8 CSI-RS ports 0 to 7 and $Z$ = 4, port groups 0, 1, 2 and 3.

In accordance with embodiments, the port grouping may also be dependent on the two polarizations of the CSI-RS ports. In case of a polarization-dependent port grouping, a first number of port groups, $Z_1$, is associated with the first $P'$ CSI-RS ports of a first polarization and a second number of port groups, $Z_2$, is associated with the remaining $P''$ CSI-RS ports of a second polarization. In one embodiment, the number of ports per polarization is identical such that $P'$ = $P''$ = $P/2$. In another embodiment, the number of ports per polarization is not identical and the number of ports associated with the first polarization is larger than the number of ports associated with the second polarization, $P' > P''$ ($P' + P'' = P$). In an embodiment, the number of ports per polarization is not identical and the number of ports associated with the first polarization is smaller than the number of ports associated with the second polarization, $P' < P''$ ($P' + P'' = P$). In one embodiment, the number of ports per polarization is either identical or not and the number of port groups for both polarizations is identical, such that $Z_1 = Z_2$. For example, the number of CSI-RS ports, $P$, is 32 and $Z_1 = Z_2 = 8$ groups are configured per polarization and the number of ports per port group is 2. In yet another embodiment, the number of CSI-RS ports, $P$, is 32 and $Z_1 = Z_2 = 4$ groups are configured per polarization and the number of ports per

$$Z_1 = Z_2 = \frac{P}{2},$$

port group is 4. In another embodiment, so that the number of port groups is identical with the number of CSI-RS ports per polarization and the number of CSI-RS ports per port group and per polarization is 1. Fig. 7 illustrates the port grouping in accordance with an embodiment of the present invention for two polarizations assuming $P$ = 8 CSI-RS ports 0 to 7 and $Z$ = 2, port groups 0 and 1 per polarization.

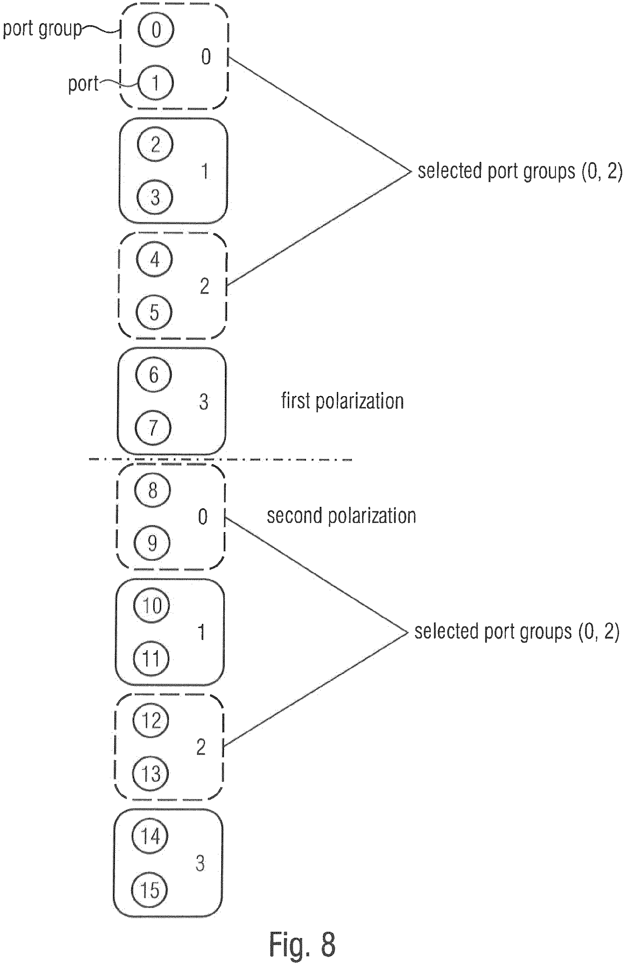

In accordance with embodiments, the above-mentioned port grouping is not dependent on the transmission layer, i.e., the port grouping is identical for all transmission layers. In accordance with another embodiment, the above-mentioned port grouping is dependent on the transmission layer, i.e., the port grouping is different per transmission layer or subset of transmission layers of the precoder matrix. Fig. 8 illustrates the port grouping in accordance with an embodiment of the present invention for two polarizations and $L = 2$ transmission layers assuming $P = 16$ CSI-RS ports 0 to 15 and $Z_1 = Z_2 = 4$, port groups 0, 1, 2 and 3 per polarization.

In accordance with embodiments, the grouping of the CSI-RS ports\antenna ports is configured via a higher layer configuration (e.g., RRC) by the gNB or any other network node to the UE. The higher layer configuration may indicate the number of CSI-RS ports, $P$, the number of port groups, $Z$ (or $Z_1$ and $Z_2$), and the number of CSI-RS ports per group. The number of CSI-RS ports per port group may be either indicated directly by the higher layer configuration, or the UE may determine the number of ports per group based on the parameters contained in the higher layer configuration. In one embodiment, the higher layer configuration includes the parameters $P$ and $Z$, and the UE determines the $\frac{P}{Z}$ CSI-RS port indices per port group based on $P$ and $Z$ (see Fig. 6). In an embodiment, the higher layer configuration includes the parameters P and Z per polarization such that each group is associated with $\frac{P}{2Z}$ CSI-RS ports (see Fig. 7).

In accordance with embodiments, the parameters $Z_1$ and $Z_2$ are indicated by the higher layer configuration. In accordance with other embodiments, predefined ratios e.g., $\frac{Z_1}{Z_2} = \frac{1}{1}, \frac{2}{1}, \frac{4}{1} \cdots$ are indicated. In one embodiment, the higher layer configuration includes the parameters P and D, where D denotes the number of CSI-RS ports per group, and the UE determines the number of groups per polarization by $Z = Z_1 = Z_2 = \frac{P}{2D}.$ In one embodiment, the higher layer configuration includes the parameters P and D and the number of groups for the two polarizations, which is given by $Z = \frac{P}{D}.$ In one embodiment, the higher layer configuration contains the parameters $P$, $Z$ and $D_z$ per port group (possibly per polarization), where $D_z$ is different per port group, per subset of port groups, or for the port groups per polarization.

The above-mentioned parameters may also depend on the transmission layer or transmission rank of the precoder matrix. This means the parameters may be different for different transmission layers and/or transmission ranks of the precoder matrix.

In accordance with embodiments, the grouping of the CSI-RS ports may be a priori known by the UE (e.g., the grouping is defined in specification), and the higher layer configuration from the gNB or any other network node only indicates the number of CSI-RS ports $P$. The grouping may be dependent on the value of the configured number of CSI-RS ports. For example, when $P = 32$, the UE is configured with $Z = 8$ port groups, or with $Z_1 = Z_2 = 4$ port groups per polarization, and when $P = 16$, the UE is configured with $Z = 4$ port groups, or with $Z_1 = Z_2 = 2$ port groups per polarization.

In accordance with embodiments, the UE is configured to select $L$ (or to select less or equal than $L$) port groups from the configured $Z$ port groups (or $Z = Z_1 = Z_2$ port groups for both polarizations) for the calculation of the precoder matrix and to indicate the selected port groups in the CSI report. The selection of the port groups may be polarization dependent or polarization independent. In case of polarization-dependent selection, the UE selects $L$ port groups (independent) per polarization. In such a case of polarization-independent port grouping, the UE selects identical $L$ port group indices for the first and the second polarization. For example, when the UE is configured with $Z = Z_1 = Z_2 = 4$ port groups per polarization and $L = 2$, the UE selects for example the port groups $(z_1, z_2)$ associated with the first polarization and the port groups $(z_1, z_2)$ associated with the second polarization (see Fig. 8).

In another embodiment, the parameter $L$ is identical to the number of port groups $Z$ (or $L = Z_1$ and $L = Z_2$ for the two polarizations of the antenna ports). Hence, the UE is configured to use all $Z$ port groups for the calculation of the precoder matrix. In such a case, the UE may not be configured with the parameter $L.$

The UE may be configured to select at least one port per selected (or configured) port group (optionally also per transmission layer) for the calculation of the precoder matrix.

The parameter $L$ is either a higher layer (e.g., RRC) parameter (*NumberofBeams*) and configured by the gNB or any other network entity, or it is a priori known by the UE (e.g., fixed in specification), or it is selected and reported by the UE. Alternatively, the parameter $L$ is derived from another parameter which is configured to the UE. For example, the number of ports, $P$, is configured by the network node and the parameter $L$ is derived from the parameter $P$. Example values for $L$ are $L \in \{2,3,4,6\}$. In another embodiment, the number of port groups, $Z$ (or $Z_1$ and $Z_2$), is configured by the network node and the parameter $L$ is derived from the parameter $Z$ (or $Z_1$ and $Z_2$). Example values for $L$ are $L \in \{2,3,4,6\}$.

When the value of $L$ is higher layer configured, it is indicated for example by the parameter *NumberOfPortGroups*,

and in one embodiment $L = 2$ when $P = 4$ and $L \in \{2,4\}$ when $P > 4$. In another embodiment, $L = 2$ when $P = 4$ and $L \in \{2,4\}$ when $P > X$. The value $X$ is fixed, for example to 12, 16, 24, or 32.

In addition, the grouping may be dependent on or independent off the transmission layer of the precoding matrix. In a first embodiment, the selected port groups depend on the transmission layer of the precoder matrix, and may change or not per transmission layer. In a second embodiment, the selected port groups are identical for all transmission layers of the precoder matrix. In a third embodiment, the selected port groups are identical for a subset of the transmission layers of the precoder matrix. For example, a number of port groups is selected for a first layer and for a second layer, and configured to be identical, and a number of port groups is selected for a third layer and for a fourth layer, and configured to be identical. In another embodiment, the sum of the number of port groups over all transmission layers is fixed, and the UE is configured to select the number of port groups per transmission layer or subset of transmission layers.

In accordance with embodiments, the UE is configured to include an information on the selected port groups in the CSI report. In one embodiment, the UE may indicate the selected $L$ port groups by a $Z$-length bit-sequence where $Z$ denotes the number of port groups for the two polarizations. Each bit in the bit-sequence is associated with one of the $Z$ port groups. A bit indicating a '1' in the bit-sequence may indicate that the associated port group is selected and a '0' may indicate that the associated port group is not selected. In one embodiment, the UE may indicate each selected port group by a $\log_2(Z)$ bit indicator. Alternatively, the UE may indicate the selected $L$ port groups jointly by a $\log_2 \binom{Z}{L}$ combinatorial bit-indicator. When the selected port groups are indicated per layer (or subset of layers) then the UE may report a bitmap, or a bit indicator as mentioned above per layer (or subset of layers). The parameter $L$ may be dependent on the transmission layer. This means the UE may be configured to apply different values of $L$ for the different transmission layers of the precoder matrix. The parameter $L$ may be dependent on the transmission rank. This means the UE may be configured to apply different values of $L$ for different transmission ranks of the precoder matrix.

In accordance with embodiments, the UE is configured to include an information on the selected port groups per polarization in the CSI report. In one embodiment, the UE may indicate the selected $L$ port groups per polarization by a $Z$-length bit-sequence where $Z$ denotes the number of port groups. Each bit in the bit-sequence is associated with one of the $Z$ port groups. A bit indicating a '1' in the bit-sequence may indicate that the associated port group is selected and a '0' may indicate that the associated port group is not selected. In an embodiment, the UE may indicate each selected port groups by a $\log_2(Z)$ bit indicator. Alternatively, the UE may indicate the selected $L$ port groups per polarization jointly by a $\log_2 \binom{Z}{L}$ combinatorial bit-indicator. When the selected port groups are indicated per layer (or subset of layers) then the UE may report a bitmap, or a bit indicator as mentioned above per layer (or subset of layers).

In accordance with embodiments, the UE may be configured to select $L'$ port groups, where $L' \leq L$, and to indicate the selected port groups using one of the methods above in the CSI report. In addition, the UE may indicate the value of $L'$ in the CSI report.

*Precoder vector or matrix selection*

The precoder vector or matrix may be expressed by a complex combination of vectors selected from the port-selection codebook(s). The UE is configured to select one or more vectors, or a vector combination from the codebook(s), wherein each vector of the codebook is associated with a port. Furthermore, the UE is configured to select a number of precoder coefficients for complex combining the selected vectors from the codebook(s). Note that for the two following embodiments of the precoder equation, it is assumed that each port group has a size of one, i.e., each port group contains only a single port.

In accordance with embodiments, the precoder vector or matrix may be expressed by a one or more vectors or by a combination of vectors selected from the port-selection codebooks, and the precoder matrix $\boldsymbol{P}_n$ for the $n$-th transmission layer for the $P$ ports and configured subbands or resource blocks is given by

$$\boldsymbol{P}_n = \alpha_n \sum_{l=0}^{L-1} \boldsymbol{b}_{n,l} p_{n,l},$$

where

$\alpha_n$ is a normalization constant,

$b_{n,l}$ is a vector selected from the codebook and associated with the *l*-th selected port, and

$p_{n,l}$ is the precoder coefficient associated with the *l*-th selected port.

In accordance with embodiments, the precoder matrix may be expressed by one or more vectors or by a combination of vectors selected from the port-selection codebooks, and the precoder matrix $P_n$ for the *n*-th transmission layer and both polarizations of the *P* ports and configured subbands or resource blocks is given by

$$P_n = \alpha_n \begin{pmatrix} \sum_{l=0}^{L-1} (b_{n,l,1} p_{n,l,1}) \\ \sum_{l=0}^{L-1} (b_{n,l,2} p_{n,l,2}) \end{pmatrix}$$

where

$\alpha_n$ is a normalization constant,

$b_{n,l,1}$ is a vector selected from the codebook and associated with the first polarization and the *l*-th selected port,

$b_{n,l,2}$ is a vector selected from the codebook and associated with the second polarization and the *l*-th selected port,

$p_{n,l,1}$ is the precoder coefficient associated with the first polarization and the *l*-th selected port, and

$p_{n,l,2}$ is the precoder coefficient associated with the second polarization and the *l*-th selected port.

In the above equations of the precoder matrix, the port group vector $b_{n,l}$ depends on the transmission layer. In case of an identical port selection for all transmission layers, $b_{n,l} = b_l, \forall n$.

In the above equations of the precoder matrix, the port group vector $b_{n,l,p}$ depends on the polarization index *p*. In case of an identical port selection for the both polarizations, $b_{n,l,p} = b_{n,l}, \forall p$. In case of an identical port selection for the both polarizations and all transmission layers, $b_{n,l,p} = b_l, \forall n, p$.

The precoder matrix may also be expressed by a complex combination of vectors selected from two port-selection codebooks. The UE is configured to select one or more vectors, or a vector combination, from a first codebook, wherein each vector of the first codebook is associated with a port group, and to select one or more vectors, or a vector combination from a second codebook, wherein each vector of the second codebook is associated with a port of a port group. Furthermore, the UE is configured to select a number of precoder coefficients for complex combining the selected vectors from the two codebooks.

In an embodiment, the first codebook comprises a number of vectors of equal size $Z \times 1$. The *n*-th vector of the first codebook includes or consists of zero-valued elements, expect the n-th element which is one.

When the number of ports per group is identical for all *Z* port groups, the second codebook comprises a number of vectors of equal size $D \times 1$, where $D = \frac{P}{Z}$ and $D = \frac{P}{2Z}$ in case of polarization-dependent and polarization-independent port grouping, respectively. The *p*-th vector of the second codebook includes or consists of zero-valued elements, expect the *p*-th element which is one. When the number of ports per group is non-identical for the *Z* port groups, the second codebook may comprise sets of vectors of different sizes, wherein each set is associated with a port group.

In an embodiment, the number of ports per group is identical for all port groups and the precoder matrix $P_n$ for the *n*-th transmission layer for the *P* ports and configured subbands or resource blocks is given by

$$P_n = \alpha_n \sum_{l=0}^{L-1} \left( b_{n,l} \otimes \sum_{d=0}^{D-1} d_{n,l,d}\, p_{n,l,d} \right),$$

where

'$\otimes$' denotes the Kronecker product,

$\alpha_n$ is a normalization constant,

$b_{n,l}$ is a vector selected from the first codebook and associated with the *l*-th selected port group,

$d_{n,l,d}$ is a vector selected from the second codebook and associated with the *d*-th selected port of the *l*-th selected port group, and

$p_{n,l,d}$ is the precoder coefficient associated with the $d$-th selected port of the $l$-th selected port group.

Alternatively, the above precoder equation may be formulated by

$$P_n = \alpha_n \sum_{l=0}^{L-1} \sum_{d=0}^{D-1} vec\{d_{n,l,d} b_{n,l}^T\} p_{n,l,d},$$

where

*'vec{...}'* denotes the operation to form a column vector from a matrix.
Alternatively, the above precoder equation may be formulated by

$$P_n = \alpha_n \sum_{l=0}^{L-1} \sum_{d=0}^{D-1} [b_{n,l}(0)d_{n,l,d}^T, b_{n,l}(1)d_{n,l,d}^T, ...., b_{n,l}(Z-1)d_{n,l,d}^T]^T p_{n,l,d},$$

where $b_{n,l}(z)$ denotes the z-th element of vector $b_{n,l}$.
In another embodiment, the number of ports per group is identical for all port groups and the port grouping is polarization-dependent such that the precoder matrix $P_n$ for the n-th transmission layer and both polarizations of the $P$ ports and configured subbands or resource blocks is given by

$$P_n = \alpha_n \begin{pmatrix} \sum_{l=0}^{L-1} \left( b_{n,l,1} \otimes \sum_{d=0}^{D-1} d_{n,l,d,1} \, p_{n,l,d,1} \right) \\ \sum_{l=0}^{L-1} \left( b_{n,l,2} \otimes \sum_{d=0}^{D-1} d_{n,l,d,2} \, p_{n,l,d,2} \right) \end{pmatrix}$$

where

$b_{n,l,1}$ is a vector which is associated with the first polarization and selected from the first codebook and associated with the $l$-th selected port group,
$b_{n,l,2}$ is a vector which is associated with the second polarization and selected from the first codebook and associated with the $l$-th selected port group,

$d_{n,l,d,1}$ is a $\frac{P}{2Z} \times 1$ vector selected from the second codebook and associated with the first polarization, the $l$-th port group and the $d$-th selected port,

$d_{n,l,d,2}$ is a $\frac{P}{2Z} \times 1$ vector selected from the second codebook and associated with the second polarization, the $l$-th selected port group and the $d$-th selected port,
$p_{n,l,d,1}$ is the precoder coefficient associated with the $d$-th selected port of the $l$-th selected port group of the first polarization, and
$p_{n,l,d,2}$ is the precoder coefficient associated with the d-th selected port of the $l$-th selected port group of the second polarization.

Alternatively, the above precoder equation may be formulated by

$$P_n = \alpha_n \begin{pmatrix} \sum_{l=0}^{L-1} \sum_{d=0}^{D-1} \left[ b_{n,l,1}(0) d_{n,l,d,1}^T, b_{n,l,1}(1) d_{n,l,d,1}^T, \ldots, b_{n,l,1}(Z_1 - 1) d_{n,l,d,1}^T \right]^T p_{n,l,d,1} \\ \sum_{l=0}^{L-1} \sum_{d=0}^{D-1} \left[ b_{n,l,2}(0) d_{n,l,d,2}^T, b_{n,l,2}(1) d_{n,l,d,2}^T, \ldots, b_{n,l,2}(Z_2 - 1) d_{n,l,d,2}^T \right]^T p_{n,l,d,2} \end{pmatrix},$$

where $b_{n,l,p}(z)$ denotes the z-th element of vector $b_{n,l,p}$.

Alternatively, the above precoder equation may be formulated by

$$P_n = \alpha_n \begin{pmatrix} \sum_{l=0}^{L-1} \sum_{d=0}^{D-1} \left[ b_{n,l}(0) d_{n,l,d}^T, b_{n,l}(1) d_{n,l,d}^T, \ldots, b_{n,l}(Z_1 - 1) d_{n,l,d}^T \right]^T p_{n,l,d} \\ \sum_{l=0}^{L-1} \sum_{d=0}^{D-1} \left[ b_{n,l+L}(0) d_{n,l+L,d}^T, b_{n,l+L}(1) d_{n,l+L,d}^T, \ldots, b_{n,l+L}(Z_2 - 1) d_{n,l+L,d}^T \right]^T p_{n,l+L,d} \end{pmatrix},$$

where $b_{n,l}(z)$, $l < L$ denotes the z-th element of vector $b_{n,l,1}$, $b_{n,l}(z)$, $l > L - 1$ denotes the z-th element of vector $b_{n,l,2}$, $d_{n,l}$ $l < L$ denotes vector $d_{n,l,1}$, and $d_{n,l}$, $l > L - 1$ denotes vector $d_{n,l,2}$.

In the above equations of the precoder matrix, the port group vector $b_{n,l}$ depends on the transmission layer. As mentioned above, in case of identical port grouping for all transmission layers, $b_{n,l} = b_l$, $\forall n$.

In another embodiment, the number of ports per group is identical for all port groups and the port grouping is polarization-independent (i.e., identical for both polarizations of the ports) such that the precoder matrix $P_n$ for the n-th transmission layer and both polarizations of the P ports and configured subbands or resource blocks is given by

$$P_n = \alpha_n \begin{pmatrix} \sum_{l=0}^{L-1} \left( b_{n,l} \otimes \sum_{d=0}^{D-1} d_{n,l,d,1}\, p_{n,l,d,1} \right) \\ \sum_{l=0}^{L-1} \left( b_{n,l} \otimes \sum_{d=0}^{D-1} d_{n,l,d,2}\, p_{n,l,d,2} \right) \end{pmatrix}$$

where

$b_{n,l}$ is a vector which is identical for both polarizations and selected from the first codebook and associated with the l-th selected port group,

$d_{n,l,d,1}$ is a $\frac{P}{2Z} \times 1$ vector selected from the second codebook and associated with the first polarization, the l-th selected port group and the d-th selected port,

$d_{n,l,d,2}$ is a $\frac{P}{2Z} \times 1$ vector selected from the second codebook and associated with the second polarization, the l-th selected port group and the d-th selected port,

$p_{n,l,d,1}$ is the precoder coefficient associated with the d-th selected port of the l-th selected port group of the first polarization, and

$p_{n,l,d,2}$ is the precoder coefficient associated with the d-th selected port of the l-th selected port group of the second polarization.

In the above equations of the precoder matrix, the port group vector $b_{n,l}$ depends on the transmission layer. As mentioned above, in case of identical port grouping for all transmission layers, $b_{n,l} = b_l$, $\forall n$.

The precoder matrix may also be expressed by a complex combination of vectors selected from a single port-selection codebook. The port-selection codebook then comprises sets of vectors, wherein each set of vectors is associated with a different port group and each vector within a set is associated with a port of the port group. The UE is configured to select one or more vector sets (port groups) from the codebook and vectors (ports) within the sets.

In an embodiment, the precoder matrix $\boldsymbol{P}_n$ for the n-th transmission layer and both polarizations of the $P$ ports and configured subbands or resource blocks is then given by

$$P_n = \alpha_n \begin{pmatrix} \sum_{l=0}^{L-1} \sum_{d=0}^{D-1} b_{n,l,d,1} \, p_{n,l,d,1} \\ \sum_{l=0}^{L-1} \sum_{d=0}^{D-1} b_{n,l,d,2} \, p_{n,l,d,2} \end{pmatrix}$$

where

$\boldsymbol{b}_{n,l,d,1}$ is a vector selected from the codebook and associated with the $d$-th selected port of the $l$-th selected port group associated with the first polarization,

$\boldsymbol{b}_{n,l,d,2}$ is a vector selected from the codebook and associated with the $d$-th selected port of the $l$-th selected port group associated with the second polarization,

$p_{n,l,d,1}$ is the precoder coefficient associated with the $d$-th selected port of the $l$-th selected port group of the first polarization, and

$p_{n,l,d,2}$ is the precoder coefficient associated with the $d$-th selected port of the $l$-th selected port group of the second polarization.

In the above equations of the precoder matrix, the port group vector $\boldsymbol{b}_{n,l,d,1}$ or $\boldsymbol{b}_{n,l,d,2}$ depends on the transmission layer. As mentioned above, in case of identical port grouping for all transmission layers, $\boldsymbol{b}_{n,l,d,t} = \boldsymbol{b}_{l,d,t}, \, \forall n, t = 1,2$.

The selected port groups may be identical for the vectors $b_{n,l,d,1}$ and $\boldsymbol{b}_{n,l,d,2}$ for the both polarizations in case of polarization-independent port grouping.

In accordance with embodiments, the UE may be configured to report the selected port groups and selected ports in a wideband manner for the entire CSI reporting band. For example, the $L$ or $L'$ port groups per polarization are selected and indicated in the CSI report by an index $q_1$, where $q_1 \in \left\{ 0, 1, \ldots, \left\lceil \frac{Z}{2\bar{d}} \right\rceil - 1 \right\}$, which requires $\left\lceil \log_2 \left\lceil \frac{Z}{2\bar{d}} \right\rceil \right\rceil$ bits. The value of $\bar{d}$ is configured with the RRC parameter *PortSelectionSamplingSize*. In an embodiment, $\bar{d}$ is an integer,

e.g., $\bar{d} \in \{1,2,3,4\}$, and $\bar{d} \leq \min\left(\left\lceil \frac{Z}{2} \right\rceil, L\right)$ or $\bar{d} \leq \min\left(\left\lceil \frac{Z}{2} \right\rceil, L'\right)$. The L or $L'$ port-group selection vectors are then given by $\boldsymbol{b}_{n,q_1\bar{d}+i}$, or $b_{n,q_1d+i,d,t}$, $i = 0, \ldots, L - 1$ or $i = 0, \ldots, L' - 1$.

The above-mentioned parameters $L$ and/or $D$ may be dependent on the transmission layer or transmission rank (RI) of the precoder matrix. This means the parameters may be different for different transmission layers or RI values of the precoder matrix.

In accordance with embodiments, the UE is configured to include the selected precoder coefficients for the transmission layers of the precoder matrix in the CSI report.

*Quantization of precoder coefficients*

In accordance with embodiments, the UE is configured to decompose and report the selected complex precoder coefficients $\{p_{n,l,d}\}$ (or $\{p_{n,l,d,t}\}$ ($t \in \{1,2\}$)) per layer separately as

$$p_{n,l,d} = a_{n,l,d}^{(1)} a_{n,l,d}^{(2)} a_{n,l,d}^{(3)} \varphi_{n,l,d},$$

$$\left(p_{n,l,d,t} = a_{n,l,d,t}^{(1)} a_{n,l,d,t}^{(2)} a_{n,l,d,t}^{(3)} \varphi_{n,l,d,t}\right)$$

where

$a_{n,l,d}^{(1)} \left(a_{n,l,d,t}^{(1)}\right)$ is a first amplitude coefficient,

$a_{n,l,d}^{(2)}(a_{n,l,d,t}^{(2)})$ is a second amplitude coefficient,

$a_{n,l,d}^{(3)}(a_{n,l,d,t}^{(3)})$ is a third amplitude coefficient,

$\varphi_{n,l,d}(\varphi_{n,l,d,t})$ is a phase coefficient.

The CSI report may contain for each selected precoder coefficient a quantized value of the first amplitude coefficient, possibly a quantized value of the second amplitude coefficient, possible a quantized value of the third amplitude coefficient, and a quantized value of the phase coefficient. A phase coefficient may be selected either from a QPSK, 8PSK, or 16QPSK alphabet and configured by the value $N_{PSK}$ (alphabet size). In one embodiment, the value of $N_{PSK}$ is configured with the higher layer parameter *PhaseAlphabetSize.* In another embodiment, the value of $N_{PSK}$ is fixed, for example to $N_{PSK} = 8$ or $N_{PSK} = 16$.

The phase coefficients may be reported per complex precoder coefficient $p_{n,l,d}$ (or $\{p_{n,l,d,t}\}$ ($t \in \{1,2\}$)).

In an embodiment, the first amplitude coefficients $a_{n,l,d}^{(1)}$ and the second amplitude coefficients $a_{n,l,d}^{(2)}$ are common for all ($l$, $d$). In this case, $a_{n,l,d}^{(1)} = 1$ and $a_{n,l,d}^{(2)} = 1$ are fixed and not reported. In one embodiment, an amplitude coefficient $a_{n,l,d}^{(3)}$ is reported per precoder coefficient (possibly except for the strongest coefficient whose amplitude coefficient is not reported).

In an embodiment, the first amplitude coefficients $a_{n,l,d}^{(1)}$ are common for all ($l$, $d$). In this case, $a_{n,l,d}^{(1)} = 1$ is fixed and not reported. In one embodiment, the amplitude coefficients $a_{n,l,d}^{(2)}$ are common for all indices $d$, and one amplitude coefficient $a_{n,l,d}^{(2)}$ is reported per index $l$($l = 0,.., L - 1$) and one amplitude coefficient $a_{n,l,d}^{(3)}$ is reported per precoder coefficient (possibly except for the strongest coefficient whose amplitude coefficient is not reported). In another embodiment, the amplitude coefficients $a_{n,l,d}^{(2)}$ are common for all indices $l$, and one amplitude coefficient $a_{n,l,d}^{(2)}$ is reported per index $d$ ($d = 0,..,D - 1$) and one amplitude coefficient $a_{n,l,d}^{(3)}$ is reported per precoder coefficient (possibly except for the strongest coefficient whose amplitude coefficient is not reported).

In an embodiment, the first amplitude coefficients $a_{n,l,d,t}^{(1)}$ are common for all ($l,d,t$). In this case, $a_{n,l,d,t}^{(1)} = 1$ is fixed and not reported. In one embodiment, the amplitude coefficients $a_{n,l,d,t}^{(2)}$ are common for all indices $d$, and one amplitude coefficient $a_{n,l,d,t}^{(2)}$ is reported per index $l$($l = 0,.., L - 1$) and per index $t$($t \in \{1,2\}$) and one amplitude coefficient $a_{n,l,d,t}^{(3)}$ is reported per precoder coefficient (possibly except for the strongest coefficient whose amplitude coefficient is not reported). In another embodiment, the amplitude coefficients $a_{n,l,d,t}^{(2)}$ are common for all indices d and indices t, and one amplitude coefficient $a_{n,l,d,t}^{(2)}$ is reported per index $l$($l = 0,..,L - 1$), and one amplitude coefficient $a_{n,l,d,t}^{(3)}$ is reported per precoder coefficient (possibly except for the strongest coefficient whose amplitude coefficient is not reported). In another embodiment, the amplitude coefficients $a_{n,l,d,t}^{(2)}$ are common for all indices $l,$ and one amplitude coefficient

$a_{n,l,d}^{(2)}$ is reported per index $d$ ($d$ = 0,..,$D$ - 1) and per index t ($t \in \{1,2\}$) and one amplitude coefficient $a_{n,l,d,t}^{(3)}$ is reported per precoder coefficient (possibly except for the strongest coefficient whose amplitude coefficient is not reported). In another embodiment, the amplitude coefficients $a_{n,l,d,t}^{(2)}$ are common for all indices $l$ and indices t, and one amplitude coefficient $a_{n,l,d,t}^{(2)}$ is reported per index $d$ ($d$ = 0,..,$D$ - 1), and one amplitude coefficient $a_{n,l,d,t}^{(3)}$ is reported per precoder coefficient (possibly except for the strongest coefficient whose amplitude coefficient is not reported).

In an embodiment, the first amplitude coefficients $a_{n,l,d,t}^{(1)}$ are common for all ($l$, d). In this case, $a_{n,l,d,t}^{(1)} = 1$ is fixed and not reported. In one embodiment, the amplitude coefficients $a_{n,l,d,t}^{(2)}$ are common for all ($l$, $d$) per polarization and one amplitude coefficient is reported per layer. In this case, $a_{n,l,d,t}^{(2)} = 1$ is fixed for t = 1 or $t$ = 2, and hence not reported for one polarization, and $a_{n,l,d,t}^{(2)}$ for t = 2 or t = 1 is reported for the other polarization. An amplitude coefficient $a_{n,l,d,t}^{(3)}$ is reported per precoder coefficient (possibly except for the strongest coefficient whose amplitude coefficient is not reported).

In an embodiment, the first amplitude coefficients $a_{n,l,d,t}^{(1)}$ are common for all $d$, and one amplitude coefficient is reported per index $l$ and per index $t$. The second amplitude coefficients $a_{n,l,d,t}^{(2)}$ are common for all $l$, and one amplitude coefficient is reported per index $d$ and per index $t$, or the second amplitude coefficients $a_{n,l,d,t}^{(2)}$ are common for all $l$ and $t$, and one amplitude coefficient is reported per index $d$. An amplitude coefficient $a_{n,l,d,t}^{(3)}$ is reported per precoder coefficient (possibly except for the strongest coefficient whose amplitude coefficient is not reported).

In an embodiment, for the amplitude coefficient reporting, a 4-bit amplitude codebook is used for $\{a_{n,l,d}^{(1)}\}$ (or $\{a_{n,l,d,t}^{(1)}\}$) and/or $\{a_{n,l,d}^{(2)}\}$ (or $\{a_{n,l,d,t}^{(2)}\}$). An embodiment is shown in Table 1 below:

Table 1:

| Mapping of $a_{n,l,d}^{(1)}$ or $a_{n,l,d,t}^{(1)}$ or $a_{n,l,d}^{(2)}$ or $a_{n,l,d,t}^{(2)}$ to indices $k_{n,l,d}^{(1)}$ or $k_{n,l,d,t}^{(1)}$ or $k_{n,l,d}^{(2)}$ or $k_{n,l,d,t}^{(2)}$ | |
|---|---|
| $k_{n,l,d}^{(1)}$ | $a_{n,l,d}^{(1)}$ |
| 0 | 0 or reserved |
| 1 | $\dfrac{1}{\sqrt{128}}$ |

(continued)

| Mapping of $a_{n,l,d}^{(1)}$ or $a_{n,l,d,t}^{(1)}$ or $a_{n,l,d}^{(2)}$ or $a_{n,l,d,t}^{(2)}$ to indices $k_{n,l,d}^{(1)}$ or $k_{n,l,d,t}^{(1)}$ or $k_{n,l,d}^{(2)}$ or $k_{n,l,d,t}^{(2)}$ | |
|---|---|
| $k_{n,l,d}^{(1)}$ | $a_{n,l,d}^{(1)}$ |
| 2 | $\left(\dfrac{1}{8192}\right)^{1/4}$ |
| 3 | $\dfrac{1}{8}$ |
| 4 | $\left(\dfrac{1}{2048}\right)^{1/4}$ |
| 5 | $\dfrac{1}{2\sqrt{8}}$ |
| 6 | $\left(\dfrac{1}{512}\right)^{1/4}$ |
| 7 | $\dfrac{1}{4}$ |
| 8 | $\left(\dfrac{1}{128}\right)^{1/4}$ |
| 9 | $\dfrac{1}{\sqrt{8}}$ |
| 10 | $\left(\dfrac{1}{32}\right)^{1/4}$ |
| 11 | $\dfrac{1}{2}$ |
| 12 | $\left(\dfrac{1}{8}\right)^{1/4}$ |
| 13 | $\dfrac{1}{\sqrt{2}}$ |

(continued)

| Mapping of $a_{n,l,d}^{(1)}$ or $a_{n,l,d,t}^{(1)}$ or $a_{n,l,d}^{(2)}$ or $a_{n,l,d,t}^{(2)}$ to indices $k_{n,l,d}^{(1)}$ or $k_{n,l,d,t}^{(1)}$ or $k_{n,l,d}^{(2)}$ or $k_{n,l,d,t}^{(2)}$ | |
|---|---|
| $k_{n,l,d}^{(1)}$ | $a_{n,l,d}^{(1)}$ |
| 14 | $\left(\dfrac{1}{2}\right)^{1/4}$ |
| 15 | 1 |

In an embodiment, for the amplitude coefficient reporting, a 3-bit amplitude codebook is used for $\{a_{n,l,d}^{(1)}\}$ (or $\{a_{n,l,d,t}^{(1)}\}$) and/or $\{a_{n,l,d}^{(2)}\}$ (or $\{a_{n,l,d,t}^{(2)}\}$). An embodiment is shown in Table 2 below:

Table 2:

| Mapping of $a_{n,l,d}^{(1)}$ or $a_{n,l,d,t}^{(1)}$ or $a_{n,l,d}^{(2)}$ or $a_{n,l,d,t}^{(2)}$ to indices $k_{n,l,d}^{(1)}$ or $k_{n,l,d,t}^{(1)}$ or $k_{n,l,d}^{(2)}$ or $k_{n,l,d,t}^{(2)}$. | |
|---|---|
| $k_{n,l,d}^{(1)}$ | $a_{n,l,d}^{(1)}$ |
| 0 | 0 or reserved |
| 1 | $\dfrac{1}{\sqrt{64}}$ |
| 2 | $\dfrac{1}{\sqrt{32}}$ |
| 3 | $\dfrac{1}{\sqrt{16}}$ |
| 4 | $\dfrac{1}{\sqrt{8}}$ |
| 5 | $\dfrac{1}{\sqrt{4}}$ |

(continued)

| Mapping of $a_{n,l,d}^{(1)}$ or $a_{n,l,d,t}^{(1)}$ or $a_{n,l,d}^{(2)}$ or $a_{n,l,d,t}^{(2)}$ to indices $k_{n,l,d}^{(1)}$ or $k_{n,l,d,t}^{(1)}$ or $k_{n,l,d}^{(2)}$ or $k_{n,l,d,t}^{(2)}$. | |
|---|---|
| $k_{n,l,d}^{(1)}$ | $a_{n,l,d}^{(1)}$ |
| 6 | $\dfrac{1}{\sqrt{2}}$ |
| 7 | 1 |

In an embodiment, for the amplitude coefficient reporting, a 3-bit amplitude codebook is used for $\{a_{n,l,d}^{(3)}\}$ (or $\{a_{n,l,d,t}^{(3)}\}$). An embodiment is shown in Table 3 below:

Table 3:

| Mapping of $a_{n,l,d}^{(3)}$ or $a_{n,l,d,t}^{(3)}$ to indices $k_{n,l,d}^{(3)}$ or $k_{n,l,d,t}^{(3)}$. | |
|---|---|
| $k_{n,l,d}^{(3)}$ | $a_{n,l,d}^{(3)}$ |
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |

(continued)

| $k_{n,l,d}^{(3)}$ | $a_{n,l,d}^{(3)}$ |
|---|---|
| Mapping of $a_{n,l,d}^{(3)}$ or $a_{n,l,d,t}^{(3)}$ to indices $k_{n,l,d}^{(3)}$ or $k_{n,l,d,t}^{(3)}$. | |
| 6 | $\frac{1}{\sqrt{2}}$ |
| 7 | 1 |

In another embodiment, for the amplitude coefficient reporting, a 1-bit amplitude codebook is used for $a_{n,l,d}^{(3)}\}$ (or $\{a_{n,l,d,t}^{(3)}\}$). Embodiments are shown in Table 4 and Table 5 below:

Table 4:

| $k_{n,l,d}^{(3)}$ | $a_{n,l,d}^{(3)}$ |
|---|---|
| Mapping of $a_{n,l,d}^{(3)}$ or $a_{n,l,d,t}^{(3)}$ to indices $k_{n,l,d}^{(3)}$ or $k_{n,l,d,t}^{(3)}$. | |
| 0 | 0 |
| 1 | 1 |

Table 5:

| $k_{n,l,d}^{(3)}$ | $a_{n,l,d}^{(3)}$ |
|---|---|
| Mapping of $a_{n,l,d}^{(3)}$ or $a_{n,l,d,t}^{(3)}$ to indices $k_{n,l,d}^{(3)}$ or $k_{n,l,d,t}^{(3)}$. | |
| 0 | $\frac{1}{\sqrt{2}}$ |
| 1 | 1 |

In Table 1 and Table 2, the first field (quantized value) may be either zero or 'reserved'. The field is 'reserved' when only non-zero precoder coefficients are reported by the UE.

*Selection of non-zero precoder coefficients*

When the number of precoder coefficients that may be selected by the UE is not restricted, the UE may select a large number of precoder coefficients for the calculation of the precoder matrix. Some of the selected precoder coefficients may have only a small amplitude and may not significantly contribute to the performance of the precoder. Therefore, in accordance with embodiments, the UE may be configured to select and to report not more than $K_0$ non-zero precoder coefficients per layer (or subset of layers or all layers).

In one embodiment, the parameter $K_0$ is configured by the gNB (or any other network node). By doing so, the feedback overhead of the CSI report may be controlled by the gNB. In another embodiment, the parameter $K_0$ is a priori known at the UE. In another embodiment, the parameter $K_0$ is derived by the UE based on the higher layer configuration of the port grouping (i.e., based on the parameters $P$ and/or $Z$ and/or $D$). Furthermore, the UE may be configured to indicate the selected number of non-zero precoder coefficients $K_1 \leq K_0$ per layer (or subset of layers or all layers) in the CSI report.

When the UE is configured to report not more than $K_0$ non-zero precoder coefficients per layer, $K_0 \leq 2LD$ for the polarization-independent port grouping. When the UE is configured to report not more than $K_0$ non-zero precoder coefficients for all layers, $K_0 \leq r2LD$, $r \in (0, RI)$ for the polarization-independent port grouping, where the parameter $r$ is not greater than the transmission rank (RI) and a priori known at the UE, or configured by the network node. For example, $r \in \{0.5, 1, 2\}$. In one embodiment, the UE is configured to report not more than $K_0$ non-zero precoder coefficients for all layers, where $K_0 \leq r2LD$, and not more than $K_0'$ ($K_0' \leq 2LD$) precoder coefficients per layer for the polarization-independent port grouping.

*Indication of non-zero precoder coefficients*

In accordance with embodiments, the UE is configured to indicate the selected non-zero precoder coefficients in the CSI report. For example, the UE may indicate the selected non-zero precoder coefficients by a bitmap, wherein each bit in the bitmap is associated with a port group and port (and hence a precoder coefficient). A '1' in the bitmap indicates that the associated precoder coefficient is non-zero, selected and reported by the UE. A '0' in the bitmap indicates that the associated precoder coefficient is not selected and not reported by the UE. For example, the bitmap may have a size of $2L \times D$, where $L$ and $D$ denote the number of selected port groups per polarization and ports per port group, respectively.

In another embodiment, the UE indicates the selected non-zero precoder coefficients by a combinatorial indicator. For example, the UE indicates the selected non-zero precoder coefficients by a $\log_2 \binom{2LD}{K_1}$ combinatorial indicator, where $K_1$ denotes the number of selected non-zero precoder coefficients, $2L$ the number of port groups for both polarizations and $D$ the number of ports per port group.

In another embodiment, the UE indicates the selected non-zero precoder coefficients by a combinatorial indicator. For example, the UE indicates the selected non-zero precoder coefficients by a $\log_2 \binom{2LD}{K_0}$ combinatorial indicator, where $K_0$ denotes the number of configured precoder coefficients, $2L$ the number of port groups for both polarizations and $D$ the number of ports per port group.

In accordance with embodiments, the UE may be configured to select $D'$ ports within a port group, where $D' \leq D$. In addition, the UE may indicate the selected ports within the groups using one of the methods above (e.g., bitmap of size $2L \times D'$ or combinatorial indicator $\log_2 \binom{2LD'}{K_1}$) in the CSI report. In addition, the UE may indicate the value of $D'$ in the CSI report.

*Indication of strongest coefficient*

In accordance with embodiments, the UE is configured to normalize the precoder coefficients per transmission layer with respect to the strongest coefficient such that the strongest coefficient has an amplitude value of 1. In order to reduce the feedback overhead for the CSI reporting of the precoder coefficients, the UE is configured not to report the amplitude and phase of the strongest coefficient and to indicate the port and port group associated with the strongest coefficient in the CSI report. For example, the port index and port group index associated with the strongest coefficient is indicated by the value of a $\log_2(K_1)$ bit indicator or by a $\log_2(K_0)$ bit indicator.

*Subband-based PMI calculation*

In accordance with embodiments, the UE may be configured to report the selected port groups and selected ports in a subband manner for the CSI reporting band. This means the UE may select per subband of the CSI reporting band a precoder matrix associated with a subband.

In an embodiment, the port groups selected by the UE (possibly per polarization) are identical for the subbands of the CSI reporting band, i.e., the selected port group vectors *b* (without index for simplicity) do not depend on a subband index, and the selected ports associated with the port vectors d as well as the precoder coefficients depend on the subband index.

In an embodiment, the port groups selected by the UE (possibly per polarization) are identical for the subbands of the CSI reporting band, i.e., the selected port group vectors *b* (without index for simplicity) do not depend on a subband index, and the ports selected by the UE, i.e., the selected port vectors *d* do not depend on a subband index, and the precoder coefficients depend on the subband index.

In an embodiment, the port groups selected by the UE (possibly per polarization) depend on a subband index, i.e., the selected port group vectors *b* (without index for simplicity) depend on a subband index, and the selected ports associated with the port vectors *d* as well as the precoder coefficients depend on the subband index.

The parameters *P, Z* and *D,* indicated by the above-mentioned higher layer configuration, may be identical to all subbands, or different for at least two subbands of the CSI reporting band.

In an embodiment, the parameter *L* or *L'* may be different for at least two different subbands of the CSI reporting band. For example, the configuration of the parameter *L* may depend on a subband size.

In an embodiment, the parameter $K_0$ may be different for at least two different subbands of the CSI reporting band. For example, the configuration of the parameter $K_0$ may depend on a subband size.

In case of the selection of an independent selection of port groups for different subbands, the UE is configured to indicate the selected port groups/port selection group vectors for the subbands in the CSI report.

In case of the selection of an independent selection of ports within the port groups for different subbands, the UE is configured to indicate the selected ports for the subbands in the CSI report.

*Codebook-based PMI reporting*

In accordance with embodiments, the PMI reported by the UE is based on a two codebook approach, where the PMI corresponds to two codebook indices $[i_i, i_2]$. The first codebook index $i_1$ contains at least the index $i_{1,1}$ which indicates the selected port groups (or port group vectors). For example, when the selected port-group vectors are indicated by the index $q_1$, $i_{1,1} \in \left\{0, 1, ..., \left\lceil \frac{Z}{2d} \right\rceil - 1\right\}$, or the port-group vectors are indicated by an $\log_2 \binom{Z}{L}$ combinatorial bit-indicator. In addition, the first codebook index $i_1$ may contain an index $i_{1,7,l}$ corresponding to the bitmap or the combinatorial indicator indicating the selected non-zero coefficients of the *l*-th transmission layer of the precoder matrix (if configured). In addition, the first codebook index $i_1$ may contain an index $i_{1,8,l}$ corresponding to strongest coefficient indicator of the *l*-th transmission layer of the precoder matrix. The second codebook index $i_2$ contains at least the index $i_{2,1,l}$ and index $i_{2,2,l}$ which indicate the amplitude ($k_{n,l,d}^{(1)}$ and/or $k_{n,l,d}^{(2)}$) values and phase values of the precoder coefficients (or non-zero precoder coefficients), respectively, for the *l*-th transmission layer of the precoder matrix.

*Precoder application at gNB*

The UE may assume that, for RI, and/or PMI calculation, the network node (gNB) applies the above precoder matrix calculated above, to the PDSCH signals for *v* layers and antenna ports {3000, ...,3000 + *P* - 1} as

$$\begin{bmatrix} y^{(3000)}(i) \\ \vdots \\ y^{(3000+P-1)}(i) \end{bmatrix} = [P_0, ..., P_{v-1}] \begin{bmatrix} x^{(0)}(i) \\ \vdots \\ x^{(v-1)}(i) \end{bmatrix},$$

where

$[x^{(0)}(i),...,x^{(v-1)}(i)]^T$ is a symbol vector of PDSCH symbols from the layer mapping defined in reference [10], $P$ is the number antenna ports, $y^{(u)}(i)$ is the precoded symbol transmitted on antenna port u, and $[P_0, ..., P_{v-1}]$ is the predicted precoder matrix calculated according to one of the above equations.

*General*

In accordance with embodiments, the wireless communication system may include a terrestrial network, or a non-terrestrial network, or networks or segments of networks using as a receiver an airborne vehicle or a spaceborne vehicle, or a combination thereof. In accordance with embodiments, the UE may comprise one or more of a mobile or stationary terminal, an IoT device, a ground based vehicle, an aerial vehicle, a drone, a building, or any other item or device provided with network connectivity enabling the item/device to communicate using the wireless communication system, like a sensor or actuator. In accordance with embodiments, the base station may comprise one or more of a macro cell base station, or a small cell base station, or a spaceborne vehicle, like a satellite or a space, or an airborne vehicle, like a unmanned aircraft system (UAS), e.g., a tethered UAS, a lighter than air UAS (LTA), a heavier than air UAS (HTA) and a high altitude UAS platforms (HAPs), or any transmission/reception point (TRP) enabling an item or a device provided with network connectivity to communicate using the wireless communication system.

The embodiments of the present invention have been described above with reference to a communication system in which the transmitter is a base station serving a user equipment, and the communication device or receiver is the user equipment served by the base station. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources. Thus, the present invention is not limited to precoding between a UE and a base station, but is equally applicable to, e.g., sidelink-based precoding for UE to UE communications.

It is noted that the term 'higher layer' as used herein, when used in isolation, denotes any communication layer above the physical layer in the protocol stack. It is further noted that the term matrix as used herein refers to a matrix including one or more columns, and in the former case the matrix may also be referred to as a vector.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

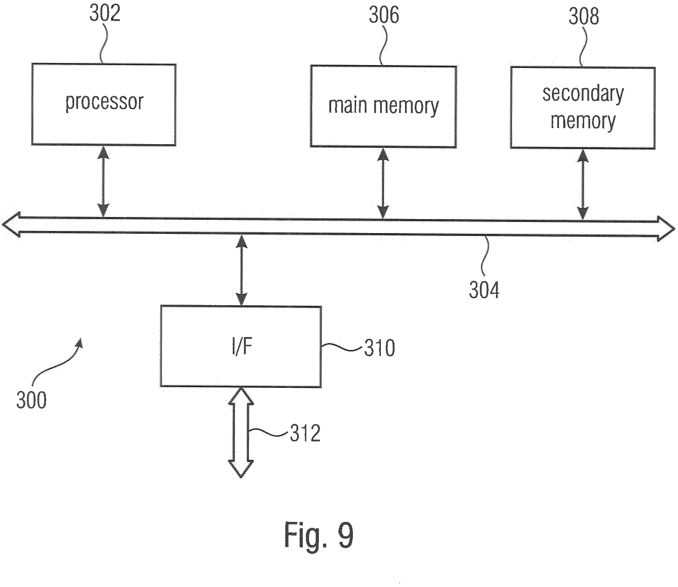

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 9 illustrates a computer system 300. The units or modules as well as the steps of the methods performed by these units may execute on one or more computer systems 300. The computer system 300 includes one or more processors 302, like a special purpose or a general purpose digital signal processor. The processor 302 is connected to a communication infrastructure 304, like a bus or a network. The computer system 300 includes a main memory 306, e.g., a random access memory (RAM), and a secondary memory 308, e.g., a hard disk drive and/or a removable storage drive. The secondary memory 308 may allow computer programs or other instructions to be loaded into the computer system 300. The computer system 300 may further include a communications interface 310 to allow software and data to be transferred between computer system 300 and external devices. The communication may be in the from electronic, electromagnetic, optical, or other signals capable of being handled by a communications interface. The communication may use a wire or a cable, fiber optics, a phone line, a cellular phone link, an RF link and other communications channels 312.

The terms "computer program medium" and "computer readable medium" are used to generally refer to tangible storage media such as removable storage units or a hard disk installed in a hard disk drive. These computer program products are means for providing software to the computer system 300. The computer programs, also referred to as computer control logic, are stored in main memory 306 and/or secondary memory 308. Computer programs may also be received via the communications interface 310. The computer program, when executed, enables the computer system 300 to implement the present invention. In particular, the computer program, when executed, enables processor 302 to implement the processes of the present invention, such as any of the methods described herein. Accordingly, such a computer program may represent a controller of the computer system 300. Where the disclosure is implemented using software, the software may be stored in a computer program product and loaded into computer system 300 using a removable storage drive, an interface, like communications interface 310.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

**References**

[1] 3GPP TS 38.214 V15.8.0: "3GPP; TSG RAN; NR; Physical layer procedures for data (Rel. 15).", Jan. 2020.
[2] Samsung "Revised WID: Enhancements on MIMO for NR", RP-182067, 3GPP RAN#81, Gold Coast, Australia, Sept. 10th - 13th, 2018.
[3] R1-1806124, Fraunhofer IIS, Fraunhofer HHI, Enhancements on Type-II CSI reporting scheme, RAN1#93, Busan, South Korea, May 21st- May 25th, 2018.
[4] R1- 1811088, Fraunhofer IIS, Fraunhofer HHI, Enhancements on Type-II CSI reporting scheme, RAN1#94-Bis, Chengdu, China, Oct. 8th - Oct. 12th, 2018.
[5] 3GPP TS 38.214 V16.0.0: "3GPP; TSG RAN; NR; Physical layer procedures for data (Rel. 16).", Jan. 2020.
[6] T. Choi, F. Rottenberg, J. Gomez-Ponce, A. Ramesh, P. Luo, J. Zhang, and A. F. Molisch, "Channel extrapolation for FDD massive MIMO: Procedure and experimental results," IEEE 90th Vehicular Technology Conference (VTC2019-Fall), 2019.
[7] W. Peng, W. Li, W. Wang, X. Wei, and T. Jiang, "Downlink channel prediction for time-varying FDD massive MIMO systems," IEEE Journal of Selected Topics in Signal Processing, vol. 13, no. 5, pp. 1090-1102, Sept. 2019.
[8] K. Hugl, K. Kalliola, and J. Laurila, "Spatial reciprocity of uplink and downlink radio channels in FDD systems," COST 273 TD(02) 066, May 2002.
[9] Z. Zong, Li Fan, S. Ge, "FDD Massive MIMO Uplink and Downlink Channel Reciprocity Properties: Full or Partial Reciprocity?," https://arxiv.org/pdf/1912.11221.pdf, Dec. 2019.
[10] 3GPP TS 38.211 V16.0.0: "3GPP; TSG RAN; NR; Physical channels and modulation (Rel. 16).", Jan. 2020.

**Claims**

1. A method for providing feedback about a MIMO channel between a transmitter and a receiver in a wireless communication system, the method comprising:

receiving, at the receiver, a radio signal via the MIMO channel, the radio signal including reference signals, like a CSI-RS signal, according to at least one reference signal configuration, the reference signal configuration being known at the receiver and indicating an antenna port or a plurality of antenna ports that is/are associated with a reference signal or a plurality of reference signals;

estimating, at the receiver, the MIMO channel based on measurements on the one or more reference signals received over the plurality of antenna ports indicated in the reference signal configuration;

determining, at the receiver, a precoding vector or matrix to be used at the transmitter so as to achieve a predefined property for a communication over the MIMO channel, the precoding vector or matrix being determined based on the estimated MIMO channel, on one or more vectors or one or more combinations of vectors selected from at least one port-selection codebook and on a set of precoding coefficients, wherein the port-selection codebook comprises a set of vectors, each vector being associated with one of the antenna ports and having a single element which is one and the remaining elements being zeros; and

reporting, by the receiver, a feedback to the transmitter, the feedback indicating the precoding vector or matrix determined by the receiver.

2. The method of claim 1, wherein the plurality, P, of antenna ports in the reference signal configuration are grouped into a number, Z, of port groups, with $Z \leq P$, so that each port group is associated with a subset of the P antenna ports.

3. The method of claim 2, wherein the UE is configured to select a number, L, of port groups out of the Z port groups and one or more ports in at least one port group for the calculation of the precoding vector or matrix.

4. The method of claim 3, wherein the number, L, of port groups is fixed and is identical to the Z port groups, the receiver, thereby, not selecting port groups.

5. The method of any one of claims 2 to 4, wherein
each vector is associated with one antenna port of a port group, and
the port-selection codebook further comprises a set of further vectors, each further vector being associated with one of the port groups and having a single element which is one and the remaining elements being zeros.

6. The method of any one of claims 2 to 4, wherein the port-selection codebook comprises

• a first code book including a set of first vectors, each first vector being associated with one of the port groups and having a single element which is one and the remaining elements being zeros, and
• a second code book including a set of second vectors, each second vector being associated with one antenna port of a port group and having a single element which is one and the remaining elements being zeros.

7. The method of any one of claims 2 to 6, wherein
the receiver is configured via a higher layer configuration, e.g., RRC, with the grouping of the plurality of antenna ports via a higher layer configuration, the higher layer configuration indicating the number, P, of antenna ports and the number, Z, of port groups, and
the number of antenna ports per group is either indicated directly by the higher layer configuration, or determined by the receiver based on parameters contained in the higher layer configuration.

8. The method of any one of claims 2 to 6, wherein
the receiver priori knows, e.g., the grouping is defined in a specification, the grouping of the plurality of antenna ports, and
a higher layer configuration indicates, e.g., via RRC, the number P of antenna ports.

9. The method of any one of the preceding claims, wherein the receiver, for the communication over the MIMO channel, is to use one or more subbands of a transmission bandwidth, e.g., the receiver is configured with a number of subbands to be used, and wherein the precoding vector or matrix is identical for the subbands used by the receiver for the communication.

10. The method of any one of the preceding claims, wherein the feedback indicates the precoding coefficients determined by the receiver, and wherein the receiver is configured to decompose each precoder coefficient in one or more amplitude coefficients and a phase coefficient.

11. The method of any one of the preceding claims, wherein the feedback indicates non-zero precoding coefficients determined by the receiver.

12. The method of any one of the preceding claims, wherein the feedback includes one or more of:

  • a Channel State Information, CSI, feedback,
  • Precoder matrix Indicator, PMI,
  • PMI/Rank Indicator, PMI/RI.

13. The method of any one of the preceding claims, wherein the receiver is configured with or a priori knows one or more feedback configurations, e.g., CSI report configurations, associated with the one or more reference signal configurations, and a precoding vector or matrix is determined for each feedback configuration.

14. The method of any one of the preceding claims, wherein each of the plurality of antenna ports in the reference signal configuration is precoded or beamformed and is associated with a spatial beam and a delay.

15. The method of any one of the preceding claims, comprising:

  performing, by the transmitter, uplink channel sounding measurements to obtain angular or spatial information and delay information, and
  utilizing the obtained angular or spatial information and delay information for precoding or beamforming a set of reference signal resources to be used for the channel measurements and feedback calculations at the receiver.

16. A non-transitory computer program product comprising a computer readable medium storing instructions which, when executed on a computer, perform the method of any one of the preceding claims.

17. A receiver apparatus in a wireless communication system, the receiver is configured to provide feedback about a MIMO channel between a transmitter and the receiver in the wireless communication system, comprising:

  a receiver unit to receive a radio signal via the MIMO channel, the radio signal including reference signals, like a CSI-RS signal, according to at least one reference signal configuration, the reference signal configuration being known at the receiver and indicating an antenna port or a plurality of antenna ports that is associated with the reference signals;
  a processor to

    estimate the MIMO channel based on measurements on the reference signals received over the plurality of antenna ports indicated in the reference signal configuration, and
    determine a precoding vector or matrix to be used at the transmitter so as to achieve a predefined property for a communication over the MIMO channel, the precoding vector or matrix being determined based on the estimated MIMO channel using at least one port-selection codebook and a set of precoding coefficients, wherein the port-selection codebook comprises a set of vectors, each vector being associated with one of the antenna ports and having a single element which is one and the remaining elements being zeros; and

  wherein the receiver is to report a feedback to the transmitter, the feedback indicating the precoding vector or matrix determined by the receiver.

18. A transmitter apparatus in a wireless communication system, the transmitter to receive feedback about a MIMO channel between the transmitter and a receiver in the wireless communication system, comprising:

  a receiver unit to receive a radio signal via the MIMO channel, the radio signal including reference signals, like uplink channel sounding signals; and
  a processor to

    perform uplink channel sounding measurements to obtain angular or spatial information and delay information, and
    utilize the obtained angular or spatial information and delay information for precoding or beamforming a set of reference signal resources to be used for the channel measurements and feedback calculations at the receiver; and

wherein the transmitter is to

transmit to the receiver a radio signal via the MIMO channel, the radio signal including the precoded or beamformed reference signals, and
receive a feedback from the receiver, the feedback indicating a precoding vector or matrix to be used at the transmitter so as to achieve a predefined property for a communication over the MIMO channel.

100

102

core network

external
network(s)

114 backhaul

eNB

# Fig. 1(a)

$108_1$    $108_2$

$UE_2$

$112_1$

$108_3$

ANT

core

$UE_1$

core

$gNB_2$

$114_2$    $116_2$

$106_2$

$112_2$

$110_1$

IoT

IoT

core

$gNB_1$

$114_1$    $116_1$

$106_1$

core

$UE_3$    $gNB_4$    core

$116_4$    $114_4$

core

$gNB_5$

$114_5$    $116_5$

$110_2$    $106_4$

core

$gNB_3$

$114_3$    $116_3$

$106_3$

$106_5$

104

# Fig. 1(b)

Fig. 2

EP 3 855 635 A1

Fig. 3

EP 3 855 635 A1

Receiving, at the UE, a radio signal via the MIMO channel, the radio signal including reference signals, like a CSI-RS signal, according to at least one reference signal configuration

the reference signal configuration is known at the UE and indicates an antenna port or a plurality of antenna ports that is/are associated with a reference signal or a plurality of reference signals

~S1

Estimating, at the UE, the MIMO channel based on measurements on the one or more reference signals received over the plurality of antenna ports indicated in the reference signal configuration

~S2

Determining, at the UE, a precoding vector or matrix to be used at the gNB so as to achieve a predefined property for a communication over the MIMO channel

the precoding vector or matrix is determined based on the estimated MIMO channel, on one or more vectors or one or more combinations of vectors selected from at least one port-selection codebook and on a set of precoding coefficients,

the port-selection codebook includes a set of vectors, and each vector being associated with one of the antenna ports and having a single element which is one and the remaining elements being zeros

~S3

Reporting, by the UE, a feedback to the gNB

the feedback indicates the precoding vector or matrix determined by the UE

~S4

Fig. 4

Receiving, from a network node, gNB, higher layer downlink CSI-RS configuration(s) of one or more downlink CSI-RS signals, and one or more CSI report configuration(s) associated with the downlink CSI-RS configuration(s) —— S11

Receiving, from a network node, gNB, a radio signal via a MIMO channel, the radio signal includes the CSI-RS signal(s) according to the one or more CSI-RS resource configuration(s) —— S12

Estimating the downlink MIMO channel based on measurements on the received one or more downlink reference signals

the CSI-RS signals are provided over a configured number of frequency domain resources, time domain resources and one or more ports —— S13

Determining, for each CSI report configuration, a precoding vector or matrix for a number of ports, subbands or resource blocks and transmission layers based on the estimated channel matrix

the precoding vector or matrix is based on at least one port-selection codebook and a set of precoding coefficients for each transmission layer for complex scaling/combining one or more vectors selected from the port-selection codebook

the port-selection codebook comprises a set of vectors, wherein each vector is associated with at least one port and has a single element which is one and the remaining elements are being zeros —— S14

Reporting, to the network node, a Channel State Information, CSI, feedback and/or a Precoder matrix Indicator, PMI and/or a PMI/Rank Indicator, PMI/RI, used to indicate the precoding matrix for the antenna ports selected by the UE from the configured antenna ports and subbands or resource blocks —— S15

Fig. 5

EP 3 855 635 A1

first polarization

second polarization

port group

port

0

1

0

1

0 1 2 3 4 5 6 7

Fig. 7

port group

port

0

1

2

3

0 1 2 3 4 5 6 7

Fig. 6

35

Fig. 8

Fig. 9

EP 3 855 635 A1

Europäisches Patentamt
European Patent Office
Office européen des brevets

# EUROPEAN SEARCH REPORT

Application Number

EP 20 15 3656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/326974 A1 (LI XUERU [CN] ET AL) 24 October 2019 (2019-10-24) | 1-14,16, 17 | INV. H04B7/0456 |
| Y | * paragraph [0003] - paragraph [0004] * <br> * paragraph [0254] - paragraph [0320] * <br> * figures 1-5 * | 15,18 | |
| Y | CMCC: "Considerations on hybrid non-precoded CSI-RS and beamformed CSI-RS", 3GPP DRAFT; R1-164880, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096844, Retrieved from the Internet: URL:http://www.3gpp.org/ftp/tsg_ran/WG1_RL 1/TSGR1_85/Docs/ [retrieved on 2016-05-13] * page 1 - page 2 * | 15,18 | |

TECHNICAL FIELDS SEARCHED (IPC)

H04B

-/--

The present search report has been drawn up for all claims

| Place of search | Date of completion of the search | Examiner |
|---|---|---|
| Munich | 30 June 2020 | Marzenke, Marco |

EPO FORM 1503 03.82 (P04C01)

page 1 of 3

Europäisches
Patentamt

European
Patent Office

Office européen
des brevets

**EUROPEAN SEARCH REPORT**

Application Number

EP 20 15 3656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LG ELECTRONICS: "Discussion on beamformed CSI-RS-based scheme enhancements", 3GPP DRAFT; R1-151532, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934404, Retrieved from the Internet: URL:http://www.3gpp.org/ftp/Meetings_3GPP_SYNC/RAN1/Docs/ [retrieved on 2015-04-19] * page 1, paragraph 2. Discussions - page 2 * | 1-18 | |
| A | NTT DOCOMO: "Type II CSI Enhancement for MU-MIMO Support", 3GPP DRAFT; R1-1911183, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191018 5 October 2019 (2019-10-05), XP051789955, Retrieved from the Internet: URL:http://www.3gpp.org/ftp/tsg_ran/WG1_RL1/TSGR1_98b/Docs/R1-1911183.zip [retrieved on 2019-10-05] * page 4 * * page 8 * | 1-18 | TECHNICAL FIELDS SEARCHED (IPC) |

-/--

The present search report has been drawn up for all claims

| Place of search | Date of completion of the search | Examiner |
|---|---|---|
| Munich | 30 June 2020 | Marzenke, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZTE: "Type II CSI feedback based on linear combination", 3GPP DRAFT; R1-1707127 TYPE II CSI FEEDBACK BASED ON LINEAR COMBINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Hangzhou, China; 20170515 - 20170519 7 May 2017 (2017-05-07), XP051262915, Retrieved from the Internet: URL:http://www.3gpp.org/ftp/tsg_ran/WG1_RL 1/TSGR1_89/Docs/ [retrieved on 2017-05-07] * page 3 - page 4 * * page 10 - page 12 * ----- | 1-18 | |
| A | ERICSSON: "Details on the unified CSI feedback framework for NR", 3GPP DRAFT; R1-1609761 DETAILS ON THE UNIFIED CSI FEEDBACK FRAMEWORK FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG1, no. Lisbon, Portugal; 20161010 - 20161014 30 September 2016 (2016-09-30), XP051158847, Retrieved from the Internet: URL:http://www.3gpp.org/ftp/tsg_ran/WG1_RL 1/TSGR1_86b/Docs/ [retrieved on 2016-09-30] * page 2, paragraph 2.2 Port selection * ----- | 1-18 | TECHNICAL FIELDS SEARCHED (IPC) |

The present search report has been drawn up for all claims

| Place of search | Date of completion of the search | Examiner |
|---|---|---|
| Munich | 30 June 2020 | Marzenke, Marco |

EPO FORM 1503 03.82 (P04C01)

## ANNEX TO THE EUROPEAN SEARCH REPORT
## ON EUROPEAN PATENT APPLICATION NO.

EP 20 15 3656

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2020

| Patent document cited in search report | | Publication date | Patent family member(s) | Publication date |
|---|---|---|---|---|
| US 2019326974 | A1 | 24-10-2019 | BR 112019013770 A2 | 21-01-2020 |
| | | | CN 108271265 A | 10-07-2018 |
| | | | CN 109845154 A | 04-06-2019 |
| | | | EP 3557797 A1 | 23-10-2019 |
| | | | US 2019326974 A1 | 24-10-2019 |
| | | | WO 2018127044 A1 | 12-07-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP; TSG RAN; NR; Physical layer procedures for data (Rel. 15). *3GPP TS 38.214 V15.8.0,* January 2020
- **SAMSUNG.** Revised WID: Enhancements on MIMO for NR. *RP-182067, 3GPP RAN#81,* 10 September 2018
- Fraunhofer IIS, Fraunhofer HHI, Enhancements on Type-II CSI reporting scheme, RAN1#93. *R1-1806124,* 21 May 2018
- Fraunhofer IIS, Fraunhofer HHI, Enhancements on Type-II CSI reporting scheme, RAN1#94-Bis. *R1-1811088,* 08 October 2018
- 3GPP; TSG RAN; NR; Physical layer procedures for data (Rel. 16). *3GPP TS 38.214 V16.0.0,* January 2020
- **T. CHOI ; F. ROTTENBERG ; J. GOMEZ-PONCE ; A. RAMESH ; P. LUO ; J. ZHANG ; A. F. MOLISCH.** Channel extrapolation for FDD massive MIMO: Procedure and experimental results. *IEEE 90th Vehicular Technology Conference (VTC2019-Fall),* 2019
- **W. PENG ; W. LI ; W. WANG ; X. WEI ; T. JIANG.** Downlink channel prediction for time-varying FDD massive MIMO systems. *IEEE Journal of Selected Topics in Signal Processing,* September 2019, vol. 13 (5), 1090-1102
- **K. HUGL ; K. KALLIOLA ; J. LAURILA.** Spatial reciprocity of uplink and downlink radio channels in FDD systems. *COST 273 TD(02),* May 2002, 066
- **Z. ZONG ; LI FAN ; S. GE.** *FDD Massive MIMO Uplink and Downlink Channel Reciprocity Properties: Full or Partial Reciprocity?,* December 2019, https://arxiv.org/pdf/1912.11221.pdf
- 3GPP; TSG RAN; NR; Physical channels and modulation (Rel. 16). *3GPP TS 38.211 V16.0.0,* January 2020